# EUROPEAN PATENT SPECIFICATION

(11) **EP 3 541 869 B1**
(45) Date of publication and mention of the grant of the patent: **05.11.2025**
(21) Application number: 17817349.8
(22) Date of filing: 16.11.2017
(51) Int. Cl.: C08K 3/20, C08K 5/14, C08L 23/08

(54) **COMPOSITION WITH BALANCE OF DISSIPATION FACTOR AND ADDITIVE ACCEPTANCE**
ZUSAMMENSETZUNG MIT AUSGLEICH VON VERLUSTFAKTOR UND ADDITIVAKZEPTANZ
COMPOSITION DOTÉE D'UN ÉQUILIBRE ENTRE LE FACTEUR DE DISSIPATION ET L'ACCEPTATION D'ADDITIF

(30) Priority: 16.11.2016 US 201662422953 P
(43) Date of publication of application: 25.09.2019
(73) Proprietor: Dow Global Technologies LLC, Midland, MI 48674 (US)
(72) Inventor: COGEN, Jeffrey M., Collegeville, PA 19426 (US); MUNDRA, Manish K., Collegeville, PA 19426 (US); PERSON, Timothy J., Collegeville, PA 19426 (US); ROY, Raghunath, Midland, MI 48674 (US)
(74) Representative: Boult Wade Tennant LLP
(86) International application number: PCT/US2017/061971
(87) International publication number: WO 2018/094018

(56) References cited:
- CN-A- 101 245 125
- KR-B1- 101 454 556

## Description

### BACKGROUND

Crosslinked polyethylene (XLPE) insulation for medium voltage (MV), high voltage (HV) and extra-high voltage (EHV) cables (e.g., power cables) must meet a complex and demanding set of technical requirements. In order to meet such requirements, it is necessary to formulate the polyethylene (PE) base resin with a number of additives. Most additives are more polar than the PE and therefore have limited solubility in the PE, that is, the PE has poor additive acceptance. As a result, additives may sweat out or exude from the insulation compound during storage. This sweat out or exudation results in a variety of manufacturing and material handling challenges, such as pellet stickiness, difficulty in pellet conveying, extruder screw slippage, crystalline contaminants, build up over time and random sluffing off of additive on process equipment, etc.

CN 101 245 125 relates to a high-current ethylene-vinyl acetate copolymer grafted maleic anhydride product, preparation method and application thereof. EP1605473 relates to an insulating composition for an electric power cable which comprises a polyolefin, an antioxidant, and a polar copolymer.

Use of PE containing polar comonomers may help to increase the solubility of such additives, but the presence of even low levels of polar comonomers increases the dissipation factor of the material. Increased dissipation factor is undesirable, since dissipation factor represents electrical losses. Cable manufacturers and utilities desire to have insulation materials with the lowest possible dissipation factor (e.g., low electrical losses).

A PE composition for use in MV, HV and EHV cables having an improved balance of additive acceptance, that is, improved ability to accept additives, and particularly polar additives and retain additives without sweat out or exudation, and low dissipation factor is needed.

### SUMMARY

In the first aspect of the invention there is provided a composition comprising: a) from 97.5 wt%, based on the total weight of the composition, of at least one ethylene-based copolymer comprising units derived from ethylene and from 0.1 wt%, based on the total weight of the ethylene-based copolymer, of units derived from one polar comonomer; b) from 0.050 wt% to 0.150 wt%, based on the total weight of the composition, of at least one antioxidant; c) from 0.5 wt% to 1.75 wt%, based on the total weight of the composition, of an organic peroxide, d) optionally, at least one co-agent; and e) optionally, at least one tree retardant, wherein the composition comprises from 0 wt% to less than 1 wt%, based on the total weight of the composition, of olefin-based polymers other than the ethylene-based copolymer; wherein the one polar comonomer consists of vinyl acetate; wherein the total comonomer content of the composition is from 0.1 wt% to 0.2 wt%, based on the total weight of the composition; wherein the ethylene-based copolymer is crosslinked, and wherein the composition has a dissipation factor of from 0% to less than or equal to 0.100% at a temperature of 120°C and an electrical stress of 23 kV/mm.

In further aspects of the invention there are provided the cable of claim 11 and the method of claim 13.

### DEFINITIONS

The numerical ranges disclosed herein include all values from, and including, the lower and upper value. For ranged containing explicit values (e.g., 1 or 2; or 3 to 5; or 6; or 7), any subrange between any two explicit values is included (e.g., 1 to 2; 2 to 6; 5 to 7; 3 to 7; 5 to 6; etc.).

Any reference to the Periodic Table of Elements is that as published by CRC Press, Inc., 1990-1991. Reference to a group of elements in this table is by the new notation for numbering groups.

Unless stated to the contrary, implicit from the context, or customary in the art, all parts and percents are based on weight and all test methods are current as of the filing date of this disclosure.

The term "composition," as used herein, includes a mixture of materials which comprise the composition, as well as reaction products and decomposition products formed from the materials of the composition.

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure not specifically listed. The term "or," unless stated otherwise, refers to the listed members individual as well as in any combination. Use of the singular includes use of the plural and vice versa.

The term "ethylene-based copolymer" refers to a copolymer that comprises a majority weight amount of polymerized ethylene based on the total weight of the copolymer and at least one comonomer.

The term "extra high voltage cable" refers to a cable to which a voltage of greater than or equal to 220kV is intended to be applied without damage to the cable.

The term "high voltage cable" refers to a cable to which a voltage of 70kV to less than 220kV is intended to be applied without damage to the cable.

The term "medium voltage cable" refers to a cable to which a voltage of 2kV to less than 70kV is intended to be applied without damage to the cable.

The term "olefin-based polymer" refers to a polymer comprising a majority weight percent of polymerized olefin based on the total weight of the polymer, and optionally may contain at least one comonomer. Olefins include unsaturated, aliphatic or alicyclic, substituted or unsubstituted hydrocarbons having one or more double bonds. Examples of olefin-based polymers include homopolymers of olefins (e.g., polypropylene, polyethylene, etc.) and copolymers of olefins and at least one comonomers (e.g., propylene-based copolymers, ethylene-based copolymers, etc.).

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term copolymer as defined hereinafter. Trace amounts of impurities, for example, catalyst residues, may be incorporated into and/or within the polymer. The term "copolymer," as used herein, refers to polymers prepared by the polymerization of at least two different types of monomers. The generic term copolymer thus includes bipolymers (employed to refer to polymers prepared from two different types of monomers), and polymers prepared from more than two different types of monomers.

### TEST METHODS

*Density:* Measured in accordance with ASMT D792 with results reported in grams per cubic centimeter (g/cc or g/cm³).

*Dissipation Factor:* The dissipation factor (DF) is the ratio of the real, in-phase power to the reactive, out of phase power. It is a measure of hysteresis in charging and discharging a dielectric. DF is a measure of the conversion of real power to reactive power, shown as heat by election or ion flow, and by dipole rotation. The dissipation factor is measured as set forth below and, unless otherwise mentioned, is reported in percent. The lower the reported DF in percent, the better the dielectric (i.e., insulation) properties of the polymer.

To measure DF, a Soken (Model DAC-PSC-UA) precision automatic Shering bridge with a 1000pF standard capacitor is used to measure the dissipation factor values. The desired frequency on the bridges is 60 Hz. Tan delta resolution is selected at 10⁻⁶ (0.0001%). All plaque samples are measured at every 1 kV increment during a step-wise increasing test voltage from 1 kV to 8 kV, followed by a step-wise decreased from 8 kV to 1 kV, and finally a second step-wise increase from 1 kV to 8 kV. As some conditioning effects may cause hysteresis between the initial step-wise increase and subsequent measurements, only the data during the second step-wise increase is used to characterize the dissipation factor of the specimens. Plaque thicknesses for all specimens is in the range of 0.3 mm to 0.4 mm (12mil to 15 mil).

*Melt Index:* Measured in accordance with ASTM D1238, Condition 190°C/2.16 kilogram (kg) weight, with results reported in grams per 10 minutes (g/10min).

*Weight Percent (wt%) Polar Comonomer:* Comonomer content for the experimental compositions (inventive and comparative) based on the amount of comonomer added to the reactor with the assumption that vinyl acetate will be nearly fully incorporated due to its high level of reactivity. The comonomer content is then confirmed through 13C NMR spectroscopy and/or Fourier Transform Infrared Spectroscopy (FTIR).

¹³C NMR spectroscopy is one of a number of techniques for measuring comonomer incorporation into a polymer. An example of this technique is described for the determination of comonomer content for ethylene/α-olefin copolymers in James C. Randall, *A Review of*

High Resolution Liquid 13Carbon Nuclear Magnetic Resonance Characterizations of Ethylene-Based Polymers, C29, J. Macromolecular Science, Polymer Revs. 201, 201-317 (1989). The basic procedure for determining the comonomer content of an olefin-based copolymer involves obtaining the ¹³C NMR spectrum under conditions where the intensity of the peaks corresponding to the different carbons in the sample is directly proportional to the total number of contributing nuclei in the sample. Methods for ensuring this proportionality involve allowance for sufficient time for relaxation after a pulse, the use of gated-decoupling techniques, relaxation agents, and the like. The relative intensity of a peak or group of peaks is obtained in practice from its computer-generated integral. After obtaining the spectrum and integrating the peaks, those peaks associated with the comonomer are assigned. This assignment can be made by reference to known spectra or literature, or by synthesis and analysis of model compounds, or by the use of isotropically labeled comonomer. The mole % comonomer can be determined by the ratio of the integrals corresponding to the number of moles of comonomer to the integrals corresponding to the number of moles of all of the monomers in the interpolymer, as described in *Randall,* for example.

Once NMR is utilized to determine the comonomer composition in one copolymer, FTIR can be used to determine it in the others, since the absorbance of the key functional groups will be approximately proportional to its concentration.

### DETAILED DESCRIPTION

In an embodiment, the disclosure provides a composition comprising a) from 97.5 wt%, based on the total weight of the composition, of at least one ethylene-based copolymer comprising units derived from ethylene and from 0.1 wt%, based on the total weight of the copolymer, of units derived from one polar comonomer, b) from 0.050 wt% to 0.150 wt%, based on the total weight of the composition, of at least one antioxidant, c) from 0.5 to 1.75 wt%, based on the total weight of the composition, of an organic peroxide, d) optionally, at least one co-agent, and e) optionally, at least one tree retardant, wherein the composition comprises from 0 wt% to less than 1 wt%, based on the total weight of the composition, of olefin-based polymers other than the ethylene-based copolymer; wherein the one polar comonomer consists of vinyl acetate; wherein the total comonomer content of the composition is from 0.1 wt% to 0.2 %, based on the total weight of the composition; wherein the ethylene-based copolymer is crosslinked, and wherein the composition has a dissipation factor of from 0% to less than or equal to 0.100% at a temperature of 120°C and an electrical stress of 23 kV/mm.

### Ethylene-Based Copolymer

The composition comprises at least one ethylene-based copolymer comprising units derived from ethylene and from 0.1 wt%, based on the total weight of the ethylene-based copolymer, of units derived from one polar comonomer. In an embodiment, the composition comprises at least one ethylene-based copolymer consisting essentially of units derived from ethylene and from 0.1 wt%, based on the total weight of the ethylene-based copolymer, of units derived from one polar comonomer.

The one polar comonomer consists of vinyl acetate.

The ethylene-based copolymer is an ethylene/vinyl acetate copolymer.

In an embodiment, the ethylene-based copolymer is an ethylene/vinyl acetate bipolymer.

The ethylene-based copolymer comprising units derived from ethylene and from 0.1 wt%, based on the total weight of the copolymer, of one polar comonomer may include two or more different comonomer types.. In an embodiment, the ethylene-based copolymer may comprise units derived from ethylene, from 0.1 wt%, based on the total weight of the copolymer, of units derived from one polar comonomer, and units derived from one or more non-polar comonomers.

The one polar comonomer is present in the ethylene-based polymer in an amount from 0.1 wt% based on the total weight of the interpolymer.

The ethylene-based copolymer has a melt index (MI) from greater than or equal to 0.1 g/10 minutes (g/10 min), or 0.5 g/10 min to less than or equal to 10 g/10 min, or 25 g/10 min, or 100 g/10 min, or 200 g/10 min. In an embodiment, the ethylene-based copolymer has a melt index (MI) from 1.0 g/10min, or 1.25 g/10min, or 1.5 g/10min, 1.75 g/10min, or 2.0 g/10min, or 2.25 g/10min, or 2.5 g/10min to 2.75 g/10min, or 3.0 g/10min, or 3.25 g/10min, or 3.5 g/10min, 3.75 g/10min, or 4.0 g/10min.

The ethylene-based copolymer has a density from 0.910 g/cc, or 0.925 g/cc to 0.935 g/cc, or 0.940 g/cc.

The ethylene-based copolymer is made in a tubular reactor or in an autoclave reactor. In an embodiment, ethylene-based copolymer is made in an autoclave reactor in order to achieve the desired level of comonomer distribution. The ethylene-based copolymer may or may not be multimodal, although preferably the ethylene-based copolymer is monomodal.

In an embodiment, the ethylene-based copolymer comprising unit derived from ethylene and from 0.1 wt% of one polar comonomer comprises one, some or all of the following properties:
(i) a melt index (MI) from 1.0 g/10min, or 1.25 g/10min, or 1.5 g/10min, 1.75 g/10min, or 2.0 g/10min, or 2.25 g/10min, or 2.5 g/10min to 2.75 g/10min, or 3.0 g/10min, or 3.25 g/10min, or 3.5 g/10min, or 3.75 g/10min, or 4.0 g/10min; and/or
(ii) a density from 0.910 g/cc, or 0.925 g/cc to 0.935 g/cc, or 0.940 g/cc.

In an embodiment, the ethylene-based copolymer comprises two of properties (i)-(ii).

In an embodiment, the ethylene-based copolymer is an ethylene-based bipolymer comprising units derived from ethylene and from 0.1 wt% units derived from vinyl acetate and comprises one, some, or all of the following properties:
(i) a melt index (MI) from 1.0 g/10min, or 1.25 g/10min, or 1.5 g/10min, 1.75 g/10min, or 2.0 g/10min, or 2.25 g/10min, or 2.5 g/10min to 2.75 g/10min, or 3.0 g/10min, or 3.25 g/10min, or 3.5 g/10min, or 3.75 g/10min, or 4.0 g/10min; and/or
(ii) a density from 0.910 g/cc, or 0.925 g/cc to 0.935 g/cc, or 0.940 g/cc.

In an embodiment, the ethylene-based bipolymer comprises two of properties (i)-(ii).

In an embodiment, the composition comprises a blend of two or more ethylene-based copolymers, wherein each of the ethylene-based copolymers comprises units derived from ethylene and from 0.1 wt%, based on the total weight of the respective copolymer, of units derived from one polar comonomer. For example, the composition may comprise a blend of one or more ethylene/alkyl acrylates with ethylene/vinyl acetate. In a further embodiment, the composition comprises a blend of ethylene/ethyl acrylate with ethylene/vinyl acetate.

The composition is free of any olefin-based polymers other than the ethylene-based copolymer or blend of two or more ethylene-based copolymers comprising the units derived from ethylene and from 0.1 wt%, based on the total weight of the respective copolymer, of units derived from one polar comonomer. As used herein, the phrase "free of olefin-based polymers other than the ethylene-based copolymer or blend of two or more ethylene-based copolymers" means the composition comprises from 0 wt% to less than 1 wt%, or 0.5 wt%, or 0.1 wt%, or 0.05 wt%, or 0.01 wt% of olefin-based polymers other than the ethylene-based copolymer or blend of two or more ethylene-based copolymers, based on the total weight of the composition.

In an embodiment, the composition includes the ethylene-based copolymer comprising units derived from ethylene and from 0.1 wt%, based on the total weight of the copolymer, of units derived from one polar comonomer, or blend of such ethylene-based copolymers, to the exclusion of all other olefin-based polymers.

The at least one ethylene-based copolymer comprising units derived from ethylene and from 0.1 wt%, based on the total weight of the copolymer, of units derived from one polar comonomer is present in the composition in an amount from 97.5 wt%, or 98 wt%, or 99 wt%, or 99.9 wt%, or less than 100 wt%, based on the total weight of the composition.

In an embodiment, the at least one ethylene-based copolymer comprising units derived from ethylene and from 0.1 wt% units derived from one polar comonomer is present in the composition from 97.5 wt% to 98 wt%, or 98.5 wt%, or 99 wt%, or 99.5 wt%, or 99.7 wt%, or 99.8 wt%, 99.9 wt%, based on the total weight of the composition.

### Antioxidants

The composition comprises at least one antioxidant. Antioxidants are types or classes of chemical compounds that are capable of being used to minimize the oxidation that can occur during the processing of polymers. The term "antioxidant" also includes chemical derivatives of the antioxidants, including hydrocarbyl.

Antioxidants that can be used in the practice of this disclosure include hindered or semi-hindered phenols, aromatic amines, aliphatic hindered amines, organic phosphites and phosphonites, thio compounds, and combinations of any two or more thereof.

Preferred antioxidants include hindered phenols such as tetrakis[methylene(3,5-di-tert-butyl-4-hydroxyhydrocinnamate)]methane, bis[(beta-(3,5-ditert-butyl-4-hydroxybenzyl)-methylcarboxyethyl)]-sulphide, and thiodiethylene bis(3,5-di-tert-butyl-4-hydroxy hydrocinnamate); phosphites and phosphonites such as tris(2,4-di-tert-butylphenyl)phosphite and di-tert-butylphenyl-phosphonite; thioethers such as 4,4'-thiobis(2-t-butyl-5-methylphenol) (TMB-6) and 2,2'-Thiobis(4-methyl-6-tert-butylphenol); semi hindered phenols such as 1,3,5-Tris(4-tert-butyl-3-hydroxy-2,6-dimethylbenzyl)-13,5,-triazine-2,4,6-trione; thioesters such as dilaurylthiodipropionate, dimyristylthiodipropionate, distearylthiodipropionate (DSTDP), and pentaerythritol tetrakis (B-laurylthiopropionate); various siloxanes; and various amines such as polymerized 2,2,4-trimethyl-1,2-dihydroquinoline, 4,4'-bis(alpha,alpha-dimethylbenzyl) diphenylamine, alkylated diphenylamines, and hindered amine light stabilizers. Additional examples can be found in Plastic Additives Handbook, Gachter et al, 1985. Preferably, the antioxidant is one or more of a thioether, a thioester, 4,4'-thiobis(2-t-butyl-5-methylphenol), DSTDP, tetrakis[methylene(3,5-di-tert-butyl-4-hydroxyhydrocinnamate)]methane, or 1,3,5-Tris(4-tert-butyl-3-hydroxy-2,6-dimethylbenzyl)-1,3,5-triazine-2,4,6-trione. More preferably, the antioxidant is one or more of TMB-6, DSTDP, tetrakis[methylene(3,5-di-tert-butyl-4-hydroxyhydrocinnamate)]methane, or 1,3,5-Tris(4-tert-butyl-3-hydroxy-2,6-dimethylbenzyl)-1,3,5-triazine-2,4,6-trione.

The composition can contain more than one antioxidant.

Antioxidants can be used in amounts from 0.050 wt% to 0.150 wt%, based on the total weight of the composition. In an embodiment, the antioxidant is present in an amount from 0.050 wt% to 0.100 wt% based on the total weight of the composition.

### Organic Peroxide

The composition comprises an organic peroxide. In an embodiment, the organic peroxide has a decomposition temperature of 100 to 220°C for a half-life of 10 minutes. Exemplary organic peroxides (with their decomposition temperatures in °C following in parenthesis) include, but are not limited to, succinic acid peroxide (110), benzoyl peroxide (110), t-butyl peroxy-2-ethyl hexanoate (113), p-chlorobenzoyl peroxide (115), t-butyl peroxy isobutylate (115), t-butyl peroxy isopropyl carbonate (135), t-butyl peroxy laurate (140), 2,5-dimethyl-2,5-di(benzoyl peroxy) hexane (140), t-butyl peroxy acetate (140), di-t-butyl diperoxy phthalate (140), t-butyl peroxy maleic acid (140), cyclohexanone peroxide (145), t-butyl peroxy benzoate (145), dicumyl peroxide (150), 2,5-dimethyl-2,5-di(t-butyl-peroxy)hexane (155), t-butyl dicumyl peroxide (155), di-t-butyl peroxide (160), alpha, alpha'-bis-t-butylperoxy-1,4-diisopropylbenzene (160), and 2,5-dimethyl-2,5-di(t-butyl-peroxy)hexyne (170). In a particular embodiment, the organic peroxide is one or more of dicumyl peroxide, 2,5-dimethyl-2,5-di(t-butyl-peroxy)hexane, t-butyl dicumyl peroxide, di-t-butyl peroxide, 2,5-dimethyl-2,5-di(t-butyl-peroxy)-3-hexyne, and alpha,alpha'-bis-t-butylperoxiy-1,4-diisopropylebenzene.

The peroxide can be added to the composition as a liquid after the composition has been melt blended and formed into pellets. In such an embodiment, the peroxide is typically sprayed onto the pellets although alternative forms of application can be employed, e.g., immersion, splashing, etc. The melt-blended composition, typically in the form of a pellet, is thus impregnated, e.g., soaked, with the peroxide, optionally in combination with one or more additives, e.g., cure co-agents, antioxidants, scorch inhibitors, nitrogenous bases, etc., typically until the pellet is dry to the touch. Once the peroxide and any additives are absorbed into the pellet, the pellet is ready for packaging.

In other embodiments, the peroxide is compounded into the polymer prior to melt filtration.

The organic peroxide is present in an amount from 0.5 wt%, or 0.75 wt%, or 1.0 wt%, or 1.25 wt% to 1.5 wt%, or 1.75 wt%, based on the total weight of the composition.

### Co-Agent

The composition optionally includes a co-agent or crosslinking (cure) booster. The co-agent can be any one, or a mixture, of co-agents, including an ester, ether, ketone, cyanurate, isocyanurate, phosphate, ortho formate, aliphatic or aromatic ether containing at least 2, and preferably 3, unsaturated groups such as allyl, vinyl or acrylate. The number of carbon atoms in the co-agent can be in the range of 9 to 40 or more, and is preferably 9 to 20.

Specific examples of co-agents include triallyl cyanurate (TAC); triallyl-1,3,5-triazine-2,4,6(1H,3H,5H)-trione also known as triallyl isocyanturate (TAIC); hexaallyl melamine; trallyl phosphate; triallyl ortho formate; tetra-allyloxy-ethane; triallyl benzene-1,3,5-tricarboxylate; diallyl phthalate; zinc dimethacrylate; ethoxylated bisphenol A dimethacrylate; methacrylate terminated monomer with average chain length of C14 or C15; pentaerythritol tetraacrylate; depentaerythritol pentaacrylate; pentaerythritol triacrylate; dimethylolpropane tetraacrylate; ethoxylated trimethylolpropane triacrylate; trimethylolpropane triacrylate; 2,4,6-triallyl-1,3,5-trione; 2,4-diphentyl-4-methyl-1-pentene; triallyl trimellitate (TATM); 3,9-divinyl-2,4,8,10-tetra-oxaspiro[5.5]undecane (DVS); and alpha-methyl styrene dimer (AMSD), as well as the other co-agents described in USP 5,346,961 and 4,018,852.

In an embodiment, the one or more co-agents is one or more of AMSD and TAIC.

Coagents are used, if used at all, in amounts from greater than 0 wt% (e.g., 0.01 wt%), or 0.1 wt %, or 0.2 wt% to 0.4 wt%, or 0.5 wt% or 3 wt%. based on the weight of the composition.

### Tree Retardant

The composition optionally includes one or more tree retardants. Tree retardants include water tree retardants, electrical tree retardants, and combinations thereof. Examples of suitable water tree retardants include alcohols of 6 to 24 carbon atoms (USP 4,206,260), organo-silanes, e.g., a silane containing an epoxy-containing radical, (USP 4,144,202), inorganic ionic salts of strong acids and strong Zwitter-ion compounds (USP 3,499,791), ferrocene compounds and substitute quinolone compounds (USP 3,956,420), polyhydric alcohols, and silicone fluids (USP 3,795,646). Polyglycols are a preferred class of water tree retardants. Polyethylene glycol (PEG) is a particularly preferred water tree retardant, particularly for use with ethylene-based copolymers, and particularly hydroxyl and/or vinyl end-capped PEG. Examples of suitable electrical tree retardants include hindered amine light stabilizers as well as certain voltage stabilizers such as oligomers and polymers of high molecular weight and delocalized electron structures, such as, for example, carotenoids, carotenoid analogs, carotenoid derivatives, conducting polymers, carbon black and combinations thereof (USP 8,680,399).

Some tree retardants may function to inhibit the formation of both water treeing and electrical treeing, such as described in, for example, USP 4,299,713 and USP 4,400,429.

### Additives

Additional additives can be added to the composition before, during and/or after processing. Useful additives include additional antioxidants, ultraviolet absorbers, antistatic agents, slip agents, plasticizers, processing aids, lubricants, stabilizers, flow aids, water tree inhibitors such as polyethylene glycol, cure boosters, scorch inhibitors, and viscosity control agents.

### Composition

The present disclosure provides a composition comprising a) from 97.5 wt%, based on the total weight of the composition, of at least one ethylene-based copolymer comprising units derived from ethylene and from 0.1 wt%, based on the total weight of the copolymer, of units derived from one polar comonomer, b) from 0.050 wt% to 0.150 wt%, based on the total weight of the composition, of at least one antioxidant, c) from 0.5 wt% to 1.75 wt%, based on the total weight of the composition, of an organic peroxide, d) optionally, at least one co-agent, and e) optionally, at least one tree retardant, wherein the composition comprises from 0 wt% to less than 1 wt%, based on the total weight of the composition, of olefin-based polymers other than the ethylene-based copolymer; wherein the one polar comonomer consists of vinyl acetate; wherein the total comonomer content of the composition is from 0.1 wt% to 0.2 wt%, based on the total weight of the composition; wherein the ethylene-based copolymer is crosslinked, wherein the composition has a dissipation factor of from 0% to less than or equal to 0.100% at a temperature of 120°C and an electrical stress of 23 kV/mm.

The total comonomer content of the composition is from 0.1 wt%, to 0.2 wt%, based on the total weight of the composition.

In an embodiment, the at least one ethylene-based copolymer comprises units derived from ethylene and from 0.1 wt%, based on the total weight of the copolymer, of units derived from one polar comonomer, and the total comonomer content of the composition is from 0.1 wt% to 0.2 wt%, based on the total weight of the composition.

*Composition 1:* The composition comprises a) from 97.5 wt%, based on the total weight of the composition, of at least one ethylene-based copolymer comprising units derived from ethylene and from 0.1 wt%, based on the total weight of the copolymer, of units derived from one polar comonomer, b) from 0.050 wt% to 0.150 wt%, based on the total weight of the composition, of at least one antioxidant, c) from 0.5 wt% to 1.75 wt%, based on the total weight of the composition, of an organic peroxide, d) optionally, at least one co-agent, and e) optionally, at least one tree retardant, wherein the composition comprises from 0 wt% to less than 1 wt%, based on the total weight of the composition, of olefin-based polymers other than the ethylene-based copolymer; wherein the one polar comonomer comprises vinyl acetate, wherein the total comonomer content of the composition is from 0.1 wt% to 0.2 wt%, based on the total weight of the composition; wherein the ethylene-based copolymer is crosslinked; wherein the composition has a dissipation factor of from 0% to less than or equal to 0.100% at a temperature of 120°C and an electrical stress of 23 kV/mm.

*Composition 2:* In an embodiment, the composition consists essentially of a) from 97.5 wt%, based on the total weight of the composition, of at least one ethylene-based copolymer comprising units derived from ethylene and from 0.1 wt%, based on the total weight of the copolymer, of units derived from at least one polar comonomer, b) from 0.050 wt% to 0.150 wt%, based on the total weight of the composition, of at least one antioxidant, c) from 0.5 wt% to 1.75 wt%, based on the total weight of the composition, of an organic peroxide, d) optionally, at least one co-agent, and e) optionally, at least one tree retardant, wherein the composition comprises from 0 wt% to less than 1 wt%, based on the total weight of the composition, of olefin-based polymers other than the ethylene-based copolymer; wherein the one polar comonomer comprises vinyl acetate; wherein the total comonomer content of the composition is from 0.1 wt% to 0.2 wt%, based on the total weight of the composition; wherein the ethylene-based copolymer is crosslinked; wherein the composition has a dissipation factor of from 0% to less than or equal to 0.100% at a temperature of 120°C and an electrical stress of 23 kV/mm.

In an embodiment, the composition is according to *Composition 1 or Composition 2* and has one, some or all of the following properties:
(1) the at least one ethylene-based copolymer comprises from 0.1 wt%, based on the total weight of the copolymer, of units derived from the at least one polar comonomer; and/or
(2) the at least one ethylene-based copolymer is a bipolymer of ethylene and the one polar comonomer; and/or
(5) the composition comprises d) the at least one co-agent; and/or
(6) the composition comprises e) the at least one tree retardant; and/or
(7) the at least one antioxidant is selected from the group consisting of a thioether, a thioester, DSTDP, 4,4'-thiobis(2-t-butyl-5-methylpenol), tetrakis[methylene(3,5-di-tert-butyl-4-hydroxyhydrocinnamate)]methane, and 1,3,5-Tris(4-tert-butly-3-hydroxy-2,6-dimethylbenzyl)-1,3,5-triazine-2,4,6-trione; and/or
(8) a total comonomer content from 0.1 wt%, to 0.2 wt%, based on the total weight of the composition.

In an embodiment, the composition includes (1) and (2), above.

In an embodiment, the composition includes (5) or (6) above. In an embodiment, the composition includes (1) and at least one of (5) and (6), above. In an embodiment, the composition includes (1), (5) and (6), above. In an embodiment, the composition includes (1), (2), and at least one of (5) and (6), above. In an embodiment, the composition includes (1), (2) and (5) or (6). In an embodiment, the composition includes (1), and (5) or (6). In an embodiment, the composition includes (1), (2), (5) and (6), or (1), (5) and (6).

In an embodiment, the composition includes (7). In an embodiment, the composition includes (7) and at least one of (5) and (6). In an embodiment, the composition includes (1), (7) and at least one of (5) and (6). In an embodiment, the composition includes (1), (5), (6) and (7). In an embodiment, the composition includes (1), (7) and (2). In an embodiment, the composition includes (1), (2), and (7), or (1) and (7). In an embodiment, the composition includes (1), (2), (7) and at least one of (5) and (6), or (1), (7) and at least one of (5) and (6).

In an embodiment, the composition includes (1), (5), (6) and (7).

In an embodiment, the composition includes at least (8). In an embodiment, the composition includes (8) and at least one of (1), (2), and (7). In an embodiment, the composition includes at least (8) and (7) and one of (1) and (2); or (8) and (1) and one of (2), and (7); or (8) and (2) and one of (1) and (7); or (8) and one of (1), (2) and (7). In an embodiment, the composition includes at least (8) and (7) and one of (1) and (2); or (8), (7), and (1); or (8), (7), and (2); or at least all of (8), (7), (2) and (1).

The ethylene-based polymer is crosslinked.

In an embodiment, the ethylene-based polymer is crosslinked and the composition has a dissipation factor at 60°C, or 90°C, or greater than 120°C from greater than 0% to less than or equal to 0.2%, or less than or equal to 0.1%.

In an embodiment, the ethylene-based polymer is crosslinked and the composition has a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, or 0.005%, or 0.010% to 0.012%, or 0.014%, or 0.016%, or 0.018%, or 0.020%, or 0.022%, or 0.024%, or 0.026%, or 0.028%, or 0.030%. In an embodiment, the ethylene-based polymer is crosslinked and the composition has a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, or 0.005%, or 0.010% to 0.012%, or 0.014%, or 0.016%, or 0.018%, or 0.020%.

In an embodiment, the ethylene-based polymer is crosslinked and the composition has a dissipation factor at 90°C and an electrical stress of 2.9 kV/mm or 5.8 kV/mm from greater than 0%, or 0.001%, or 0.002%, or 0.003% to 0.004%, or 0.005%, or 0.006%, or 0.008%. In an embodiment, the ethylene-based polymer is crosslinked and the composition has a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or 0.010%, or 0.012%, or 0.014%. In an embodiment, the ethylene-based polymer is crosslinked and the composition has a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014% or 0.016%, or 0.018%, or 0.020%, or 0.025%, or 0.030%, or 0.035%. In an embodiment, the ethylene-based polymer is crosslinked and the composition has a dissipation factor at 90°C and an electrical stress of 20 kV/mm or 23 kV/mm from greater than 0%, or 0.002% or 0.005%, or 0.010%, or 0.015% to 0.020%, or 0.025%, or 0.030%, or 0.035%, or 0.040%, or 0.045%, or 0.050%, or 0.055%, or 0.060%, or 0.065%.

In an embodiment, the ethylene-based polymer is crosslinked and the composition has a dissipation factor at 90°C and an electrical stress of 2.9 kV/mm or 5.8 kV/mm from greater than 0%, or 0.001%, or 0.002%, or 0.003% to 0.004%, or 0.005%, or 0.006%. In an embodiment, the ethylene-based polymer is crosslinked and the composition has a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or less than 0.010%. In an embodiment, the ethylene-based polymer is crosslinked and the composition has a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014%, or 0.016%, or 0.018%, or less than 0.020%. In an embodiment, the ethylene-based polymer is crosslinked and the composition has a dissipation factor at 90°C and an electrical stress of 20 kV/mm or 23 kV/mm from greater than 0%, or 0.002% or 0.005%, or 0.010%, or 0.015% to 0.020%, or 0.025%, or 0.030%, or 0.035%, or 0.040%.

In an embodiment, the ethylene-based polymer is crosslinked and the composition has a dissipation factor at 120°C and an electrical stress of 2.9 kV/mm from greater than 0%, or 0.001%, or 0.002%, or 0.004%, or 0.006% to 0.008%, or 0.010%, or 0.012%, or 0.014%. In an embodiment, the ethylene-based polymer is crosslinked and the composition has a dissipation factor at 120° and an electrical stress of 5.8 kV/mm from greater than 0%, or 0.002%, or 0.004%, or 0.006%, or 0.008%, or 0.009% to 0.010%, or 0.011%, or 0.012%, or 0.014%, or 0.016%, or 0.018%. In an embodiment, the ethylene-based polymer is crosslinked and the composition has a dissipation factor at 120°C and an electrical stress of 9 kV/mm from greater than 0%, or 0.002%, or 0.005%, or 0.010%, or 0.015% to 0.018%, or 0.020%, or 0.022%, or 0.024%. In an embodiment, the ethylene-based polymer is crosslinked and the composition has a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030% or 0.035%, or 0.040%. In an embodiment, the ethylene-based polymer is crosslinked and the composition has a dissipation factor at 120°C and an electrical stress of 15 kV/mm from greater than 0%, or 0.005%, 0.010%, or 0.015%, or 0.020% to 0.025%, or 0.030%, or 0.035%, or 0.040%, or 0.050%, or 0.060%, or 0.070%. In an embodiment, the ethylene-based polymer is crosslinked and the composition has a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%, or 0.110%. In an embodiment, the ethylene-based polymer is crosslinked and the composition has a dissipation factor at 120°C and an electrical stress of 20kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%, or 0.160%. The ethylene-based polymer is crosslinked and the composition has a dissipation factor at 120°C and an electrical stress of 23kV/mm from 0%, 0.005%, or 0.010%, or 0.015%, or 0.020%, or 0.025%, or 0.030% to 0.040%, or 0.050%, or 0.060%, or 0.080%, to less than or equal to 0.100%.

In an embodiment, the ethylene-based polymer is crosslinked and the composition has a dissipation factor at 120°C and an electrical stress of 2.9 kV/mm from greater than 0%, or 0.001%, or 0.002%, or 0.004%, or 0.006% to 0.008%, or 0.010%, or 0.012%. In an embodiment, the ethylene-based polymer is crosslinked and the composition has a dissipation factor at 120°and an electrical stress of 5.8 kV/mm from greater than 0%, or 0.002%, or 0.004%, or 0.006%, or 0.008%, or 0.009% to 0.010%, or 0.011%, or 0.012%, or 0.013%, or 0.014%. In an embodiment, the ethylene-based polymer is crosslinked and the composition has a dissipation factor at 120°C and an electrical stress of 9 kV/mm from greater than 0%, or 0.002%, or 0.005%, or 0.010%, or 0.015% to 0.018%, or 0.020%, or 0.021%. In an embodiment, the ethylene-based polymer is crosslinked and the composition has a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030% or 0.035%. In an embodiment, the ethylene-based polymer is crosslinked and the composition has a dissipation factor at 120°C and an electrical stress of 15 kV/mm from greater than 0%, or 0.005%, or 0.010%, or 0.015%, or 0.020% to 0.025%, or 0.030%, or 0.035%, or 0.040%, or 0.050%, or 0.060%. In an embodiment, the ethylene-based polymer is crosslinked and the composition has a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%. In an embodiment, the ethylene-based polymer is crosslinked and the composition has a dissipation factor at 120°C and an electrical stress of 20kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%. The ethylene-based polymer is crosslinked and the composition has a dissipation factor at 120°C and an electrical stress of 23kV/mm from 0%, 0.005%, or 0.010%, or 0.015%, or 0.020%, or 0.025%, or 0.030% to 0.040%, or 0.050%, or 0.060%, or 0.080%, to less than or equal to 0.100%.

In an embodiment, the ethylene-based polymer is crosslinked and the composition has a TMB-6 sweat out from 0 to less than 100 ppm at 4°C and 0 days, or from 0 to less than 120 ppm at 4°C and 7 days, or from 0 to less than 140 ppm at 4°C and 14 days, or from 0 to less than 160 ppm at 4°C and 28 days, or from 0 to less than 190 ppm at 4°C and 56 days, or from 0 to less than 215 ppm at 4°C and 112 days.

In an embodiment, the ethylene-based polymer is crosslinked and the composition has a TMB-6 sweat out from 0 to less than 100 ppm at 50°C and 0 days, or from 0 to less than 700 ppm at 50°C and 7 days, or from 0 to less than 800 ppm at 50°C and 14 days, or from 0 to less than 850 ppm at 50°C and 28 days, or from 0 to less than 750 ppm at 50°C and 56 days, or from 0 to less than 700 ppm at 50°C and 112 days.

*Composition 3:* In an embodiment, the composition comprises a) from 97.5 wt%, based on the total weight of the composition, of at least one ethylene-based copolymer comprising units derived from ethylene and from 0.1 wt%, based on the total weight of the copolymer, units derived from one polar comonomer; b) from 0.050 wt% to 0.150 wt%, based on the total weight of the composition, of at least one antioxidant; c) from 0.5 wt% to 1.75 wt%, based on the total weight of the composition, of an organic peroxide; d) optionally, at least one co-agent; and e) optionally, at least one tree retardant, wherein the composition comprises from 0 wt% to less than 1 wt%, based on the total weight of the composition, of olefin-based polymers other than the ethylene-based copolymer; wherein the at least one polar comonomer comprises vinyl acetate; wherein the total comonomer content of the composition is from 0.1 wt% to 0.2 wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm.

*Composition 4:* In an embodiment, the composition comprises a) from 97.5 wt%, based on the total weight of the composition, of at least one ethylene-based copolymer comprising units derived from ethylene and from 0.1 wt% based on the total weight of the copolymer, units derived from one polar comonomer, wherein the one polar comonomer is vinyl acrylate; b) from 0.050 wt% to 0.150 wt%, based on the total weight of the composition, of at least one antioxidant; c) from 0.5 wt% to 1.75 wt%, based on the total weight of the composition, of an organic peroxide; d) optionally, at least one co-agent; and e) optionally, at least one tree retardant, wherein the composition comprises from 0 wt% to less than 1 wt%, based on the total weight of the composition, of olefin-based polymers other than the ethylene-based copolymer; wherein the total comonomer content of the composition is from 0.1 wt% to 0.2wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm.

*Composition 5:* In an embodiment, the composition comprises a) from 97.5 wt%, based on the total weight of the composition, of at least one ethylene-based bipolymer comprising units derived from ethylene and from 0.1 wt%, based on the total weight of the copolymer, units derived from one polar comonomer, wherein the one polar comonomer is vinyl acrylate; b) from 0.050 wt% to 0.150 wt%, based on the total weight of the composition, of at least one antioxidant; c) from 0.5 wt% to 1.75 wt%, based on the total weight of the composition, of an organic peroxide; d) optionally, at least one co-agent; and e) optionally, at least one tree retardant, wherein the composition comprises from 0 wt% to less than 1 wt%, based on the total weight of the composition, of olefin-based polymers other than the ethylene-based bipolymer; wherein the total comonomer content of the composition is from 0.1 wt% to 0.2 wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm.

*Composition 6:* In an embodiment, the composition comprises a) from 97.5 wt% to 98 wt%, or 98.5 wt%, or 99 wt%, or 99.5 wt%, or 99.7 wt%, or 99.8 wt%, or 99.9 wt%, based on the total weight of the composition, of at least one ethylene-based bipolymer comprising of units derived from ethylene and from 0.1 wt%, or 0.5 wt% to 0.75 wt%, or 1.0 wt%, or 1.25 wt%, or 1.5 wt%, or 1.75 wt%, based on the total weight of the ethylene-based bipolymer, of a polar comonomer consisting of vinyl acetate; b) from 0.050 wt% to 0.100 wt%, or 0.150 wt% based on the total weight of the composition of at least one antioxidant; c) from 0.5 wt%, or 0.75 wt%, or 1.0 wt%, or 1.25 wt% to 1.5 wt%, or 1.75 wt%, based on the total weight of the composition, of an organic peroxide; d) optionally, at least on co-agent; and e) optionally, at least one tree retardant, wherein the composition comprises from 0 wt% to less than 1 wt%, based on the total weight of the composition, of olefin-based polymers other than the ethylene-based bipolymer; wherein the total comonomer content of the composition is from 0.1 wt% to 0.2 wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm.

*Composition 7:* In an embodiment, the composition consists essentially of a) from 97.5 wt% to 98 wt%, or 98.5 wt%, or 99 wt%, or 99.5 wt%, or 99.7 wt%, or 99.8 wt%, or 99.9 wt%, based on the total weight of the composition of an ethylene-based bipolymer comprising of units derived from ethylene and from 0.1 wt%, or 0.5 wt% to 0.75 wt%, or 1.0 wt%, or 1.25 wt%, or 1.5 wt%, or 1.75 wt%, based on the total weight of the ethylene-based bipolymer, of vinyl acetate; b) from 0.050 wt% to 0.100 wt%, or 0.150 wt%, based on the total weight of the composition of at least one antioxidant; c) from 0.5 wt%, or 0.75 wt%, or 1.0 wt%, or 1.25 wt% to 1.5 wt%, or 1.75 wt%, based on the total weight of the composition, of an organic peroxide; d) optionally, at least one co-agent; and e) optionally, at least one tree retardant, wherein the composition comprises from 0 wt% to less than 1 wt%, based on the total weight of the composition, of olefin-based polymers other than the ethylene-based bipolymer; wherein the total comonomer content of the composition is from 0.1 wt% to 0.2 wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm.

In an embodiment, the composition is according to *Composition 1, Composition 2, Composition 3, Composition 4, Composition 5, Composition 6, or Composition* 7, wherein the ethylene-based copolymer or ethylene-based bipolymer is crosslinked, and the composition has one, some or all of the following properties:
(i) a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, 0.005%, or 0.010% to 0.012%, or 0.014%, or 0.016%, or 0.018%, or 0.020%, or 0.022%, or 0.024%, or 0.026%, or 0.028%, or 0.030%; and/or
(ii) a dissipation factor at 90°C and an electrical stress of 2-9 kV/mm or 5.8 kV/mm from greater than 0%, or 0.001%, or 0.002%, or 0.003% to 0.004%, or 0.005%, or 0.006%, or 0.008%; and/or
(iii) a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or 0.010%, or 0.012%, or 0.014%; and/or
(iv) a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014% or 0.016%, or 0.018%, or 0.020%, or 0.025%, or 0.030%, or 0.035%; and/or
(v) a dissipation factor at 90°C and an electrical stress of 20 kV/mm or 23 kV/mm from greater than 0%, or 0.002% or 0.005%, or 0.010% or 0.015% to 0.020%, or 0.025%, or 0.030%, or 0.035%, or 0.040%, or 0.045%, or 0.050%, or 0.055%, or 0.060%, or 0.065%; and/or
(vi) a dissipation factor at 120°C and an electrical stress of 2.9 kV/mm from greater than 0%, or 0.001%, or 0.002%, or 0.004%, or 0.006% to 0.008%, or 0.010%, or 0.012%, or 0.014%; and/or
(vii) a dissipation factor at 120° and an electrical stress of 5.8 kV/mm from greater than 0%, or 0.002%, or 0.004%, or 0.006%, or 0.008%, or 0.009% to 0.010%, or 0.011%, or 0.012%, or 0.014%, or 0.016%, or 0.018%; and/or
(viii) a dissipation factor at 120°C and an electrical stress of 9 kV/mm from greater than 0%, or 0.002%, or 0.005%, or 0.010%, or 0.015% to 0.018%, or 0.020%, or 0.022%, or 0.024%; and/or
(ix) a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030% or 0.035%, or 0.040%; and/or
(x) a dissipation factor at 120°C and an electrical stress of 15 kV/mm from greater than 0%, or 0.005%, 0.010%, or 0.015%, or 0.020% to 0.025%, or 0.030%, or 0.035%, or 0.040%, or 0.050%, or 0.060%, or 0.070%; and/or
(xi) a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%, or 0.110%; and/or
(xii) a dissipation factor at 120°C and an electrical stress of 20kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%, or 0.160%; and/or
(xiii) a dissipation factor at 120°C and an electrical stress of 23kV/mm from greater than 0%, 0.005%, or 0.010%, or 0.015%, or 0.020%, or 0.025%, or 0.030% to 0.040%, or 0.050%, or 0.060%, or 0.080%, or 0.100%.

In an embodiment, the composition is according to *Composition 1, Composition 2, Composition 3, Composition 4, Composition 5, Composition 6, or Composition* 7, wherein the composition has at least two, at least three, at least four, at least five, at least six, at least seven, at least eight, at least nine, at least ten, at least eleven, at least twelve, or all thirteen of properties i)-xiii).

In an embodiment, the composition is according to *Composition 1, Composition 2, Composition 3, Composition 4, Composition 5, Composition 6, or Composition* 7 and the composition has at least property i), one of properties ii)-v), and one of properties xi)-xiii).

In an embodiment, the composition is according to *Composition 1, Composition 2, Composition 3, Composition 4, Composition 5, Composition 6, or Composition 7,* and the composition has at least properties i), ii), and vi); or i), ii) and vii); or i), ii) and viii); or i), iii) and ix); i), iv), and x); i), iv), and xi); or i), v), and xii); or i), v), and xiii).

In an embodiment, the composition is according to *Composition 1, Composition 2, Composition 3, Composition 4, Composition 5, Composition 6, or Composition 7,* and the composition has one, some or all of the following properties:
(i) a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, 0.005%, or 0.010% to 0.012%, or 0.014%, or 0.016%, or 0.018%, or 0.020%; and/or
(ii) a dissipation factor at 90°C and an electrical stress of 2.9 kV/mm or 5.8 kV/mm from greater than 0%, or 0.001%, or 0.002%, or 0.003% to 0.004%, or 0.005%, or 0.006%; and/or
(iii) a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or less than 0.010%; and/or
(iv) a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014%, or 0.016%, or 0.018%, or less than 0.020%; and/or
(v) a dissipation factor at 90°C and an electrical stress of 20 kV/mm or 23 kV/mm from greater than 0%, or 0.002%, or 0.005%, or 0.010%, or 0.015% to 0.020%, or 0.025%, or 0.030%, or 0.035%, or 0.040%; and/or
(vi) a dissipation factor at 120°C and an electrical stress of 2.9 kV/mm from greater than 0%, or 0.001%, or 0.002%, or 0.004%, or 0.006% to 0.008%, or 0.010%, or 0.012%; and/or
(vii) a dissipation factor at 120° and an electrical stress of 5.8 kV/mm from greater than 0%, or 0.002%, or 0.004%, or 0.006%, or 0.008%, or 0.009% to 0.010%, or 0.011%, or 0.012%, or 0.013%, or 0.014%; and/or
(viii) a dissipation factor at 120°C and an electrical stress of 9 kV/mm from greater than 0%, or 0.002%, or 0.005%, or 0.010%, or 0.015% to 0.018%, or 0.020%, or 0.021%; and/or
(ix) a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030%, or 0.035%; and/or
(x) a dissipation factor at 120°C and an electrical stress of 15 kV/mm from greater than 0%, or 0.005%, 0.010%, or 0.015%, or 0.020% to 0.025%, or 0.030%, or 0.035%, or 0.040%, or 0.050%, or 0.060%; and/or
(xi) a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%; and/or
(xii) a dissipation factor at 120°C and an electrical stress of 20kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%; and/or
(xiii) a dissipation factor at 120°C and an electrical stress of 23kV/mm from greater than 0%, or 0.005%, or 0.010%, or 0.015%, or 0.020%, or 0.025%, or 0.030% to 0.040%, or 0.050%, or 0.060%, or 0.080%, or 0.100%

In an embodiment, the composition is according to *Composition 1, Composition 2, Composition 3, Composition 4, Composition 5, Composition 6, or Composition* 7, wherein the composition has at least two, at least three, at least four, at least five, at least six, at least seven, at least eight, at least nine, at least ten, at least eleven, at least twelve, or all thirteen of properties i)-xiii).

In an embodiment, the composition is according to *Composition 1, Composition 2, Composition 3, Composition 4, Composition 5, Composition 6, or Composition* 7 wherein the composition has at least property i), one of properties ii)-v), and one of properties xi)-xiii).

In an embodiment, the composition is according to *Composition 1, Composition 2, Composition 3, Composition 4, Composition 5, Composition 6, or Composition* 7, the composition has at least properties i), ii), and vi); or i), ii) and vii); or i), ii) and viii); or i), iii) and ix); i), iv), and x); i), iv), and xi); or i), v), and xii); or i), v), and xiii).

It was surprisingly discovered that the disclosed composition according to claim 1, comprising an ethylene-based copolymer comprising units derived from ethylene and from 0.1 wt%, based on the total weight of the ethylene-based polymer, of units derived from one polar comonomer as essentially the only (or *the* only) olefin-based polymer in the composition exhibits improved (lower) dissipation factor compared to compositions containing the same total amount of polar comonomer, but having the ethylene-based polymer containing the polar comonomer diluted in another olefin-based polymer, such as polyethylene. More particularly, it was discovered that the disclosed composition enables an improved balance of additive acceptance and low dissipation factor. Particularly, the disclosed composition exhibits an improved balance of additive acceptance and low dissipation factor compared to compositions containing the same total amount of polar comonomer, but having the ethylene-based polymer containing the polar comonomer diluted in another olefin-based polymer, such as polyethylene.

It was further found that the solubility of the antioxidant TMB-6 (4,4'-thiobis(2-t-butyl-5-methylphenol is improved (increased) in the compositions of the present disclosure relative to the solubility of TMB-6 in a low density polyethylene (LDPE), alone. The solubility of TMB-6 in LDPE is 0.1%, which is problematic, particularly in cable applications, because the TBM-6 is known to sweat out or exude from the cable insulation over time. However, it was found that TMB-6 has improved (greater) solubility in the composition including an ethylene-based polymer comprising units derived from ethylene and from 0.1 wt%, based on the total weight of the ethylene-based polymer, of units derived from one polar comonomer, i.e., a solubility greater than 0.1%. As a result, cable insulation compositions made of a composition at least one ethylene-based polymer comprising units derived from ethylene and from 0.1 wt%, based on the total weight of the ethylene-based polymer, of units derived from at least one polar comonomer and including TMB-6 as an antioxidant had less sweat out of the TMB-6 over time compared to cable insulation compositions made of LDPE.

When referring to dissipation factor herein, the term is generally used as it relates to the performance of insulation compositions in AC (alternating current) applications. However, it is anticipated that the disclosed compositions also exhibit additive solubility enhancement and improved electrical performance in DC (direct current) applications.

### Cable

The present disclosure also provides for a cable, such as a power cable, comprising a layer (e.g., insulation layer) comprising a composition as described herein. In one embodiment, the present disclosure provides for a cable, such as a power cable, comprising a conductor, and an insulation layer covering at least a portion of the conductor, the insulation layer comprising a composition as described herein. The insulation layer comprises a composition comprising a) from 97.5 wt%, based on the total weight of the composition, of at least one ethylene-based copolymer comprising units derived from ethylene and from 0.1 wt%, based on the total weight of the ethylene-based copolymer, of units derived from one polar comonomer, b) from 0.050 wt% to 0.150 wt%, based on the total weight of the composition, of at least one antioxidant, and c) from 0.5 wt% to 1.75 wt%, based on the total weight of the composition, of an organic peroxide, wherein the composition comprises from 0 wt% to less than 1 wt%, based on the total weight of the composition, of olefin-based copolymers other than the ethylene-based copolymer; wherein the one polar comonomer consists of vinyl acetate; wherein the total comonomer content of the composition is from 0.1 wt% to 0.2 wt%, based on the total weight of the composition; wherein the ethylene-based copolymer is crosslinked, and wherein the composition has a dissipation factor of from 0% to less than or equal to 0.100% at a temperature of 120°C and an electrical stress of 23 kV/mm. In a further embodiment, the composition of the insulation layer also optionally includes d) at least one co-agent and e) at least one water tree retardant or electrical tree retardant.

The ethylene-based polymer is crosslinked.

In an embodiment, the cable has an insulation layer made of any of *Composition 1, Composition 2, Composition 3, Composition 4, Composition 5, Composition 6, or Composition* 7.

In an embodiment, the compositions of this disclosure can be applied to a cable or wire as an insulation in amounts and by methods such as those described, for example, in USP 5,246,783 and 4,144,202. Typically, the sheath composition is prepared in a reactor-extruder equipped with a cable-coating die and after the components of the composition are formulated, the composition is extruded over one or more conductors as the cable is drawn through the die.

In an embodiment, the insulation layer is characterized by a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, or 0.005%, or 0.010% to 0.012%, or 0.014%, or 0.016%, or 0.018%, or 0.020%.

In an embodiment, the insulation layer is characterized by a dissipation factor at 90°C and an electrical stress of 2.9 kV/mm or 5.8 kV/mm from greater than 0%, or 0.001%, or 0.002%, or 0.003% to 0.004%, or 0.005%, or 0.006%. In an embodiment, the insulation layer is characterized by a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or less than 0.010%. In an embodiment, the insulation layer is characterized by a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014%, or 0.016%, or 0.018%, or less than 0.020%. In an embodiment, the insulation layer is characterized by a dissipation factor at 90°C and an electrical stress of 20 kV/mm or 23 kV/mm from greater than 0%, or 0.002%, or 0.005%, or 0.010%, or 0.015% to 0.020%, or 0.025%, or 0.030%, or 0.035%, or 0.040%.

In an embodiment, the insulation layer is characterized by a dissipation factor at 120°C and an electrical stress of 2.9 kV/mm from greater than 0%, or 0.001%, or 0.002%, or 0.004%, or 0.006% to 0.008%, or 0.010%, or 0.012%. In an embodiment, the insulation layer is characterized by a dissipation factor at 120° and an electrical stress of 5.8 kV/mm from greater than 0%, or 0.002%, or 0.004%, or 0.006%, or 0.008%, or 0.009% to 0.010%, or 0.011%, or 0.012%, or 0.013%, or 0.014%. In an embodiment, the insulation layer is characterized by a dissipation factor at 120°C and an electrical stress of 9 kV/mm from greater than 0%, or 0.002%, or 0.005%, or 0.010%, or 0.015% to 0.018%, or 0.020%, or 0.021%. In an embodiment, the insulation layer is characterized by a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030%, or 0.035%. In an embodiment, the insulation layer is characterized by a dissipation factor at 120°C and an electrical stress of 15 kV/mm from greater than 0%, or 0.005%, 0.010%, or 0.015%, or 0.020% to 0.025%, or 0.030%, or 0.035%, or 0.040%, or 0.050%, or 0.060%. In an embodiment, the insulation layer is characterized by a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%. In an embodiment, the insulation layer is characterized by a dissipation factor at 120°C and an electrical stress of 20 kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%. In an embodiment, the insulation layer is characterized by a dissipation factor at 120°C and an electrical stress of 23kV/mm from greater than 0%, 0.005%, or 0.010%, or 0.015%, or 0.020%, or 0.025%, or 0.030% to 0.040%, or 0.050%, or 0.060%, or 0.080.

In an embodiment, the insulation layer is characterized by a TMB-6 sweat out from 0 to less than 100 ppm at 4°C and 0 days, or from 0 to less than 120 ppm at 4°C and 7 days, or from 0 to less than 140 ppm at 4°C and 14 days, or from 0 to less than 160 ppm at 4°C and 28 days, or from 0 to less than 190 ppm at 4°C and 56 days, or from 0 to less than 215 ppm at 4°C and 112 days.

In an embodiment, the insulation layer is characterized by a TMB-6 sweat out from 0 to less than 100 ppm at 50°C and 0 days, or from 0 to less than 700 ppm at 50°C and 7 days, or from 0 to less than 800 ppm at 50°C and 14 days, or from 0 to less than 850 ppm at 50°C and 28 days, or from 0 to less than 750 ppm at 50°C and 56 days, or from 0 to less than 700 ppm at 50°C and 112 days.

In an embodiment, the insulation layer is composed of a composition according to *Composition 1, Composition 2, Composition 3, Composition 4, Composition 5, Composition* 6, *or Composition 7,* wherein the ethylene-based copolymer or ethylene-based bipolymer is crosslinked, and the insulation layer has one, some or all of the following properties:
(i) a dissipation factor at 60°C and an electrical stress or 2.9 kVmm, or 5.8 kV/mm, or 9 kV/mm, or 12 kV/mm, or 15 kV/mm, or 17 kV/mm, or 20 kV/mm, or 23 kV/mm from greater than 0%, or 0.001%, 0.005%, or 0.010% to 0.012%, or 0.014%, or 0.016%, or 0.018%, or 0.020%; and/or
(ii) a dissipation factor at 90°C and an electrical stress of 2-9 kV/mm or 5.8 kV/mm from greater than 0%, or 0.001%, or 0.002%, or 0.003% to 0.004%, or 0.005%, or 0.006%; and/or
(iii) a dissipation factor at 90°C and an electrical stress of 9 kV/mm or 12 kV/mm from 0.001%, or 0.002%, or 0.003%, or 0.004%, or 0.005% to 0.006%, or 0.007%, or 0.008%, or 0.009%, or less than 0.010%; and/or
(iv) a dissipation factor at 90°C and an electrical stress of 15 kV/mm or 17 kV/mm from greater than 0%, or 0.001%, or 0.002%, or 0.004%, or 0.006% to 0.008%, or 0.010%, or 0.012%, or 0.014%, or 0.016%, or 0.018%, or less than 0.020%; and/or
(v) a dissipation factor at 90°C and an electrical stress of 20 kV/mm or 23 kV/mm from greater than 0%, or 0.002%, or 0.005%, or 0.010%, or 0.015% to 0.020%, or 0.025%, or 0.030%, or 0.035%, or 0.040%; and/or
(vi) a dissipation factor at 120°C and an electrical stress of 2.9 kV/mm from greater than 0%, or 0.001%, or 0.002%, or 0.004%, or 0.006% to 0.008%, or 0.010%, or 0.012%; and/or
(vii) a dissipation factor at 120° and an electrical stress of 5.8 kV/mm from greater than 0%, or 0.002%, or 0.004%, or 0.006%, or 0.008%, or 0.009% to 0.010%, or 0.011%, or 0.012%, or 0.013%, or 0.014%; and/or
(viii) a dissipation factor at 120°C and an electrical stress of 9 kV/mm from greater than 0%, or 0.002%, or 0.005%, or 0.010%, or 0.015% to 0.018%, or 0.020%, or 0.021%; and/or
(ix) a dissipation factor at 120°C and an electrical stress of 12 kV/mm from greater than 0%, or 0.005%, or 0.010%, or 0.012%, or 0.015%, or 0.017% to 0.020%, or 0.022%, or 0.025%, or 0.027%, or 0.030%, or 0.035%; and/or
(x) a dissipation factor at 120°C and an electrical stress of 15 kV/mm from greater than 0%, or 0.005%, or 0.010%, or 0.015%, or 0.020% to 0.025%, or 0.030%, or 0.035%, or 0.040%, or 0.050%, or 0.060%; and/or
(xi) a dissipation factor at 120°C and an electrical stress of 17 kV/mm from greater than 0%, or 0.005%, or 0.010%, or 0.015%, or 0.020% to 0.025%, or 0.030%, or 0.040%, or 0.050%, or 0.060%, or 0.070%, or 0.080%, or 0.090%, or 0.100%; and/or
(xii) a dissipation factor at 120°C and an electrical stress of 20 kv/mm from greater than 0%, or 0.005%, or 0.010%, or 0.015%, or 0.020%, or 0.030% to 0.040%, or 0.050%, or 0.060%, or 0.070%, or 0.080%, or 0.090%, or 0.100%, or 0.150%; and/or
(xiii) a dissipation factor at 120°C and an electrical stress of 23 kV/mm from greater than 0%, or 0.005%, or 0.010%, or 0.015%, or 0.020%, or 0.025%, or 0.030% to 0.040%, or 0.050%, or 0.060%, or 0.080%.

In an embodiment, the insulation layer is composed of a composition according to *Composition 1, Composition 2, Composition 3, Composition 4, Composition 5, Composition* 6, *or Composition 7,* and the insulation layer has at least two, at least three, at least four, at least five, at least six, at least seven, at least eight, at least nine, at least ten, at least eleven, at least twelve, or all thirteen of properties i)-xiii).

In an embodiment, the insulation layer is composed of a composition according to *Composition 1, Composition 2, Composition 3, Composition 4, Composition 5, Composition* 6, *or Composition 7,* wherein the ethylene-based copolymer or ethylene-based bipolymer is crosslinked, and the insulation layer has at least property i), one of properties ii)-v), and one of properties xi)-xiii).

In an embodiment, the insulation layer is composed of a composition according to *Composition 1, Composition 2, Composition 3, Composition 4, Composition 5, Composition* 6, *or Composition 7,* wherein the insulation layer has at least properties i), ii), and vi); or i), ii) and vii); or i), ii) and viii); or i), iii) and ix); i), iv), and x); i), iv), and xi); or i), v), and xii); or i), v), and xiii).

In one embodiment, the cable is selected from the group consisting of a medium voltage (MV) cable, a high voltage cable (HV) and an extra-high voltage (EHV) cable. In an embodiment, the cable is preferably selected from the group consisting of a HV cable and an EHV cable. For example, and specifically to MV, HV and EHV cables, it is often desirable to have a dissipation factor of from 0 to less than or equal to 0.100 up to 120°C up to threshold electrical stress levels. Particularly, for MV cables, it is often desirable to have a dissipation factor of from 0 to less than or equal to 0.100 at 120°C and an electrical stress of at least 3.8 kV/mm. For HV cables, it is often desirable to have a dissipation factor of from 0 to less than or equal to 0.100 at 120°C and an electrical stress of at least 12 kV/mm. For EHV cables, it is often desirable to have a dissipation factor of from 0 to less than or equal to 0.100 at 120°C and an electrical stress of at least 17 kV/mm. In testing cables at voltages significantly greater than the standard operating conductions for the cable and rated voltage, it is often desirable to have a dissipation factor remain from 0 to less than 0.100 even at higher stress levels, for example, up to 20 kV/mm, and even up to 23 kV/mm.

More particularly, and specifically to MV, HV and EHV cables, it is often desirable for the insulation layer of such cables to be characterized as having a dissipation factor of from 0 to less than or equal to 0.100 up to 120°C up to threshold electrical stress levels. Particularly, for MV cables, it is often desirable for the insulation layer of such cables to be characterized as having a dissipation factor of from 0 to less than or equal to 0.100 at 120°C and an electrical stress of at least 5.8 kV/mm. For HV cables, it is often desirable for the insulation layer of such cables to be characterized as having a dissipation factor of from 0 to less than or equal to 0.100 at 120°C and an electrical stress of at least 12 kV/mm. For EHV cables, it is often desirable for the insulation layer of such cables to be characterized as having a dissipation factor of from 0 to less than or equal to 0.100 at 120°C and an electrical stress of at least 17 kV/mm. In testing cables at voltages significantly greater than the standard operating conductions for the cable and rated voltage, it is often desirable for the insulation layer of such cables to be characterized as having a dissipation factor which remains from 0 to less than 0.100 even at higher stress levels, for example, up to 20 kV/mm, and even up to 23 kV/mm. Although it is often desirable to have a dissipation factor below 0.100 to comply with certain industry and customer requirements, it is always preferable to have the dissipation factor be as low as possible.

In another embodiment, the disclosure provides a method of conducting electricity, the method comprising applying a voltage of from greater than or equal to 2 kV, or from greater than or equal to 70 kV to greater than 220 kV, or to less than or equal to 220 kV across a cable including an insulation layer comprising a composition as provided herein. In an embodiment, the cable includes a conductor and an insulation layer covering at least a portion of the conductor, the insulation layer comprising a composition comprising a) at least one ethylene-based copolymer comprising units derived from ethylene and from 0.1 wt%, based on the total weight of the ethylene-based copolymer, of units derived from one polar comonomer, b) from 0.050 wt% to 0.150 wt%, based on the total weight of the composition, of at least one antioxidant, and c) from 0.5 wt% to 1.75 wt%, based on the total weight of the composition, of an organic peroxide, wherein the composition comprises from 0 wt% to less than 1 wt%, based on the total weight of the composition, of olefin-based copolymers other than the ethylene-based copolymer; wherein the at least one polar comonomer consists of vinyl acetate; wherein the total comonomer content of the composition is from 0.1 wt% to 0.2 wt%, based on the total weight of the composition; wherein the ethylene-based copolymer is crosslinked and wherein the composition has a dissipation factor of from 0% to less than or equal to 0.100% at a temperature of 120°C and an electrical stress of 23 kV/mm. In a further embodiment, the composition of the insulation layer also optionally includes d) at least one co-agent and e) at least one tree retardant.

In further embodiments, the voltage applied across the cable is selected from the group consisting of medium voltage (i.e., from greater than or equal to 2 kV to less than 70 kV), high voltage (i.e., from greater than or equal to 70 kV to less than 220 kV), and extra-high voltage (i.e., greater than or equal to 220 kV).

By way of example, some embodiments of the present disclosure will now be described in detail in the following examples.

### EXAMPLES

The polymers, compositions and processes of this disclosure, and their use, are more fully described by the following examples. The following examples are provided for the purpose of illustrating the disclosure.

### Materials

PE1: low density polyethylene (LDPE); 0.921 g/cc; MI = 1.8 g/10 min
EVA1 (Elvax^{™} 40L03): ethylene-vinyl acetate; 40 wt% vinyl acetate; MI = 3 g/10 min
EVA2 (Elvax^{™} 460): ethylene-vinyl acetate; 18wt% vinyl acetate; MI = 2.5 g/10 min
EVA3 (Elvax^{™} 260): ethylene-vinyl acetate; 28wt% vinyl acetate; MI = 6 g/10 min
EVA4 (Elvax^{™} 360): ethylene-vinyl acetate; 25wt% vinyl acetate; MI = 2 g/10 min
EVA5: ethylene-vinyl acetate; 0.1wt% vinyl acetate; MI = 2.3 g/10 min
EVA6: ethylene-vinyl acetate; 0.2wt% vinyl acetate; MI = 2.5 g/10 min
EVA7: ethylene-vinyl acetate; 0.4wt% vinyl acetate; MI = 2.8 g/10 min
EVA8: ethylene-vinyl acetate; 0.8wt% vinyl acetate; MI = 3.7 g/10 min
EVA9: ethylene-vinyl acetate; 1.6wt% vinyl acetate; MI = 2.5 g/10 min
EEA1: ethylene-ethyl acrylate; 16wt% ethyl acrylate; MI = 1 g/10 min; density = 0.93 g/cc
Antioxidant: Lowinox TBM-6 (4,4'-thio-bis(2-butyl-5-methylphenol))
Organic Peroxide: dicumyl peroxide
Coagent: triallyl isocyanurate (TAIC), available as Trilink 7 from Lianda Corp.

Crosslinkable samples are prepared with the amounts of the materials as set forth in Table 1, below. For each sample, PE1 and the copolymer of ethylene and polar comonomer, if applicable, are fluxed in a Brabender mixer bowl targeting 180°C melt temperature. The mixer is set to 30 rpm. Once the flux is achieved, the antioxidant is added and the sample is mixed for 5 minutes. The resulting material is pressed into a disk at room temperature and then cut into small pieces by a guillotine cutter. The small pieces are extruded using a single screw extruder at 180°C into strands, which are chopped to provide pelleted intermediate compounds. The pelleted intermediate compounds are soaked with dicumyl peroxide by pre-heating the pellets at 70°C for 4 hours and then soaking the heated pellets with the peroxide in a glass jar. The samples are then rolled for 10 minutes to ensure uniform distribution of the peroxide.

The samples are then left in the oven at 70°C for at least 12 hours to provide crosslinkable polyethylene compounds. The resulting crosslinkable polyethylene compounds are crosslinked on an electric press starting at 120°C for 3 minutes at low pressure (3.45 MPa (500 psi)) and 4 minutes at high pressure (17.24 MPa (2500 psi)). The plaques are then chopped into pieces and plaqued again at 120°C for 3 minutes at low pressure (2.76 MPa (400 psi)) and 4 minutes at high pressure (17.24 MPa (2500 psi)). The temperature is then raised to 180°C and once the temperature is reached, the plaques are kept under high pressure and 180°C for 12 minutes.

**Table 1: Control and Comparative Samples CS1-CS5**

| | **Control** | **CS1** | **CS2** | **CS3** | **CS4** | **CS5** |
|---|---|---|---|---|---|---|
| PE1 (wt%) | 98.2 | 97.6 | 96.9 | 97.4 | 97.3 | 96.7 |
| EVA1 (wt%) | -- | 0.6 | -- | -- | -- | -- |
| EVA2 (wt%) | -- | -- | 1.3 | -- | -- | -- |
| EVA3 (wt%) | -- | -- | -- | 0.8 | -- | -- |
| EVA4 (wt%) | -- | -- | -- | -- | 0.9 | -- |
| EEA1(wt%) | -- | -- | -- | -- | -- | 1.5 |
| Antioxidant (wt%) | 0.1 | 0.1 | 0.1 | 0.1 | 0.1 | 0.1 |
| Organic Peroxide (wt%) | 1.7 | 1.7 | 1.7 | 1.7 | 1.7 | 1.7 |
| | | | | | | |
| wt% polar comonomer in final composition | 0.0 | 0.2 | 0.2 | 0.2 | 0.2 | 0.2 |

| | | | | | | |
|---|---|---|---|---|---|---|
| CS = comparative sample | | | | | | |

The resulting crosslinked plaques (nominal thickness = 0.3 mm) are degassed at 60°C for 3 days in a vacuum oven and assessed for dissipation factor at 60°C, 90°C and 120°C using 2 kV, 4 kV, 6kV and 8kV test conditions as described above. The results of the dissipation factor testing are shown in Table 2, below. The results of the dissipation factor testing for the Control and CS1-CS5 at 120°C and an electrical stress of 23±2 kV/mm at 120°C are also presented in graphical form in FIG. 1.

**Table 2: Dissipation Factor (%) for the Control and CS1-CS5**

| Stress (kV/mm) | 2.9±0.3 | 5.8±0.6 | 9±1 | 12±1 | 15±2 | 17±2 | 20±2 | 23±2 | Temp. (°C) |
|---|---|---|---|---|---|---|---|---|---|
| | dissipation factor (%) | | | | | | | | |
| **Control** | 0.005 | 0.005 | 0.005 | 0.005 | 0.005 | 0.006 | 0.006 | 0.006 | 60 |
| **CS1** | 0.012 | 0.013 | 0.014 | 0.015 | 0.015 | 0.015 | 0.015 | 0.015 | 60 |
| **CS2** | 0.005 | 0.005 | 0.005 | 0.005 | 0.006 | 0.006 | 0.006 | 0.006 | 60 |
| **CS3** | 0.008 | 0.008 | 0.008 | 0.009 | 0.009 | 0.009 | 0.010 | 0.010 | 60 |
| **CS4** | 0.007 | 0.007 | 0.008 | 0.008 | 0.008 | 0.008 | 0.008 | 0.008 | 60 |
| **CS5** | 0.007 | 0.007 | 0.007 | 0.007 | 0.008 | 0.009 | 0.009 | 0.006 | 60 |
| **Control** | 0.005 | 0.005 | 0.005 | 0.005 | 0.006 | 0.007 | 0.008 | 0.011 | 90 |
| **CS1** | 0.022 | 0.019 | 0.018 | 0.019 | 0.021 | 0.024 | 0.029 | 0.036 | 90 |
| **CS2** | 0.004 | 0.005 | 0.006 | 0.007 | 0.009 | 0.011 | 0.013 | 0.015 | 90 |
| **CS3** | 0.008 | 0.008 | 0.009 | 0.012 | 0.016 | 0.021 | 0.026 | 0.032 | 90 |
| **CS4** | 0.008 | 0.008 | 0.009 | 0.010 | 0.012 | 0.014 | 0.017 | 0.020 | 90 |
| **CS5** | 0.007 | 0.008 | 0.010 | 0.011 | 0.013 | 0.015 | 0.017 | 0.018 | 90 |
| **Control** | 0.011 | 0.012 | 0.014 | 0.016 | 0.017 | 0.019 | 0.023 | 0.026 | 120 |
| **CS1** | 0.035 | 0.039 | 0.052 | 0.072 | 0.105 | 0.149 | 0.2.2 | 0.264 | 120 |
| **CS2** | 0.015 | 0.023 | 0.032 | 0.042 | 0.053 | 0.065 | 0.078 | 0.095 | 120 |
| **CS3** | 0.021 | 0.030 | 0.047 | 0.070 | 0.102 | 0.139 | 0.179 | 0.218 | 120 |
| **CS4** | 0.019 | 0.027 | 0.039 | 0.054 | 0.074 | 0.097 | 0.121 | 0.149 | 120 |
| **CS5** | 0.012 | 0.019 | 0.028 | 0.0.36 | 0.044 | 0.053 | 0.064 | 0.076 | 120 |

In each of the formulations in Table 1 except the Control, the total polar comonomer content of the composition is the same (0.2 wt%). However, in each formulation, the 0.2 wt% of polar comonomer content is achieved by a different diluting scheme, that is, the ethylene-based copolymer comprising the units derived from the at least one polar comonomer is diluted with LDPE. For example, in preparing CS1, EVA1 having 40 wt% polar comonomer (VA) content is added to the PE1 (LDPE) at 0.6 wt%, resulting in the final polar comonomer content of 0.2 wt%. In contrast, in preparing CS2, EVA2 having 18 wt% polar comonomer content is added to the PE1 (LDPE) at 1.3 wt%, also resulting in the final polar comonomer (VA) content of 0.2 wt%.

As shown in Table 2, at all temperatures and electrical stress levels measured, a surprising trend is observed. As the content of the polar comonomer (vinyl acetate or ethyl acrylate) present in the copolymer that was used to deliver the polar comonomer to the overall system decreased (i.e., as the polar comonomer was more broadly distributed across the composition), the dissipation factor decreased despite the final polar comonomer content of the overall composition being the same (0.2 wt%) for each comparative sample. That is, it was expected that the dissipation factor at a given temperature would remain approximately constant because the overall comonomer (VA or EA) content of the overall composition remained constant (0.2 wt%). However, it was surprisingly discovered that the dissipation factor decreased as the LDPE content of the compositions decreased (i.e., the copolymer used to deliver the polar comonomer to the overall system is diluted less).

In order to meet the electrical requirements of MV, HV and EHV insulation, it is desirable to minimize the level of polar comonomer in the composition as a whole. The results of the present disclosure indicate that the way to have the least detrimental impact on electrical properties while including a given level of polarity for the needed level of solubility enhancement is to have the polar comonomer distributed across the entire polymer portion of the composition, i.e., use an ethylene-based copolymer comprising units derived from ethylene and from 0.1 wt%, based on the total weight of the copolymer, of units derived from at least one polar comonomer as the only olefin-based polymer of the composition, instead of delivering the polar comonomer via blending of an ethylene-polar comonomer copolymer with a non-polar ethylene-based polymer or other olefin-based polymer.

Based on the surprising and unexpected results observed in Table 2, a series of six ethylene/vinyl acetate bipolymers are prepared with total vinyl acetate levels of 0.1 wt%, 0.2 wt%, 0.4 wt%, 0.8 wt%, 1.6 wt% and 3.2 wt%. The bipolymers are each prepared in an autoclave high pressure polyethylene reactor. The six ethylene/vinyl acetate polymers are evaluated in a similar fashion to the comparative examples, except they are used as the sole polymers in the compositions, i.e., not blended with LDPE, as summarized in Table 3, below. As shown in Table 4, below, the results are consistent with the extrapolated data from Table 2.

**Table 3: Inventive Examples IE1, IE2, and IE6, and Reference Examples RE3-RE5 and RE7**

| | **IE1** | **IE2** | **RE3** | **RE4** | **RE5** | **IE6** | **RE7** |
|---|---|---|---|---|---|---|---|
| EVA5 (wt%) | 98.2 | -- | -- | -- | -- | -- | -- |
| EVA6 (wt%) | -- | 98.2 | -- | -- | -- | 98.4 | -- |
| EVA7 (wt%) | -- | -- | 98.2 | -- | -- | -- | 98.4 |
| EVA8 (wt%) | -- | -- | -- | 98.2 | -- | -- | -- |
| EVA9 (wt%) | -- | -- | -- | -- | 98.2 | -- | -- |
| Antioxidant (wt%) | 0.1 | 0.1 | 0.1 | 0.1 | 0.1 | 0.1 | 0.1 |
| Organic Peroxide (wt%) | 1.7 | 1.7 | 1.7 | 1.7 | 1.7 | 0.5 | 0.5 |
| Coagent (wt%) | -- | -- | -- | -- | -- | 1.0 | 1.0 |
| | | | | | | | |
| wt% polar comonomer in final composition | 0.1 | 0.2 | 0.4 | 0.8 | 1.6 | 0.2 | 0.4 |

| | | | | | | | |
|---|---|---|---|---|---|---|---|
| IE=inventive example; RE=reference example | | | | | | | |

**Table 4: Dissipation Factor (%) for IE1-IE2 and IE6 and RE2-RE5 and RE7**

| Stress (kV/mm) | 2.9±0.3 | 5.8±0.6 | 9±1 | 12±1 | 15±2 | 17±2 | 20±2 | 23±2 | Temp. (°C) |
|---|---|---|---|---|---|---|---|---|---|
| | dissipation factor (%) | | | | | | | | |
| **IE1** | 0.005 | 0.005 | 0.005 | 0.005 | 0.005 | 0.005 | 0.005 | 0.005 | 60 |
| **IE2** | 0.007 | 0.007 | 0.007 | 0.007 | 0.007 | 0.008 | 0.008 | 0.009 | 60 |
| **RE3** | 0.011 | 0.011 | 0.011 | 0.011 | 0.010 | 0.010 | 0.010 | 0.010 | 60 |
| **RE4** | 0.011 | 0.011 | 0.011 | 0.012 | 0.012 | 0.012 | 0.012 | 0.013 | 60 |
| **RE5** | 0.015 | 0.016 | 0.016 | 0.017 | 0.017 | 0.017 | 0.018 | 0.019 | 60 |
| **IE6** | 0.006 | 0.006 | 0.007 | 0.007 | 0.007 | 0.007 | 0.007 | 0.007 | 60 |
| **RE7** | 0.010 | 0.010 | 0.010 | 0.011 | 0.013 | 0.018 | 0.018 | 0.018 | 60 |
| **IE1** | 0.003 | 0.003 | 0.004 | 0.004 | 0.004 | 0.005 | 0.005 | 0.006 | 90 |
| **IE2** | 0.003 | 0.004 | 0.004 | 0.004 | 0.005 | 0.006 | 0.008 | 0.008 | 90 |
| **RE3** | 0.004 | 0.005 | 0.005 | 0.006 | 0.007 | 0.007 | 0.009 | 0.010 | 90 |
| **RE4** | 0.004 | 0.004 | 0.005 | 0.006 | 0.007 | 0.009 | 0.010 | 0.011 | 90 |
| **RE5** | 0.005 | 0.006 | 0.008 | 0.009 | 0.013 | 0.019 | 0.026 | 0.035 | 90 |
| **IE6** | 0.005 | 0.005 | 0.005 | 0.005 | 0.006 | 0.009 | 0.010 | 0.012 | 90 |
| **RE7** | 0.004 | 0.005 | 0.006 | 0.007 | 0.008 | 0.010 | 0.012 | 0.012 | 90 |
| **IE1** | 0.007 | 0.008 | 0.011 | 0.012 | 0.013 | 0.015 | 0.016 | 0.018 | 120 |
| **IE2** | 0.008 | 0.010 | 0.011 | 0.013 | 0.014 | 0.016 | 0.019 | 0.024 | 120 |
| RE3 | 0.007 | 0.009 | 0.011 | 0.013 | 0.015 | 0.017 | 0.020 | 0.023 | 120 |
| RE4 | 0.008 | 0.011 | 0.015 | 0.020 | 0.024 | 0.028 | 0.031 | 0.035 | 120 |
| **RE5** | 0.010 | 0.013 | 0.018 | 0.027 | 0.039 | 0.060 | 0.084 | 0.118 | 120 |
| **IE6** | 0.008 | 0.009 | 0.010 | 0.012 | 0.014 | 0.016 | 0.024 | 0.026 | 120 |
| **RE7** | 0.011 | 0.013 | 0.017 | 0.020 | 0.025 | 0.030 | 0.036 | 0.043 | 120 |

| | | | | | | | | | |
|---|---|---|---|---|---|---|---|---|---|
| CS=comparative sample IE=inventive example RE=reference example | | | | | | | | | |

As shown in Table 4, the dissipation factor of IE1-IE2 and IE6 and RE2-RE5 and RE7, each of which uses an EVA bipolymer as the sole polyolefin to form a composition containing less than or equal to 3.5 wt% VA, remains low for all testing conditions. That is, the dissipation factor at 60°C remains less than or equal to 0.030%, and indeed, less than 0.020%, at an electrical stress from 2.9 kV/mm to 23 kV/mm. The dissipation factor at 90°C remains less than 0.010%, and more particularly remains less than 0.007%, at an electrical stress from 2.9 kV/mm to 5.8 kVmm. The dissipation factor at 90°C remains less than 0.020%, and particularly less than 0.010%, at an electrical stress from 9 kV/mm to 12 kV/mm. The dissipation factor at 90°C remains less than 0.040%, and particularly less than 0.020%, at an electrical stress from 15 kV/mm to 17 kV/mm. The dissipation factor at 90°C remains less than or equal to 0.060%, and particularly less than 0.030%, at an electrical stress from 20 kV/mm to 23 kV/mm. The dissipation factor at 120°C remains less than 0.015%, and more particularly less than 0.012%, at an electrical stress of 2.9 kV/mm. The dissipation factor at 120°C remains less than 0.016%, and more particularly less than 0.014%, at an electrical stress of 5.8 kV/mm. The dissipation factor at 120°C remains less than or equal to 0.022%, and more particularly less than 0.020%, at an electrical stress of 9 kV/mm. The dissipation factor at 120°C remains less than 0.040%, and more particularly less than 0.220%, at an electrical stress of 12 kV/mm. The dissipation factor at 120°C remains less than 0.070%, and particularly less than 0.040%, at an electrical stress of 15 kV/mm. The dissipation factor at 120°C remains less than 0.110%, and particularly less than 0.070%, at an electrical stress of 17 kV/mm. The dissipation factor at 120°C remains less than or equal to 0.160%, and particularly less than 0.090%, at an electrical stress of 20 kV/mm. The dissipation factor at 120°C remains less than 0.200%, and particularly less than 0.120%, at an electrical stress of 23 kV/mm.

An additional analysis of the six ethylene/vinyl acetate bipolymers is completed by making a table at a constant temperature and electrical stress for each composition. This is set forth in Table 5 for the most demanding conditions measures (e.g., highest temperature and highest electrical stress).

**Table 5: Dissipation Factor (120°C/23±2 kV/mm) (%) for CS1-CS4 and IE2**

| | **Copolymer (EVA) Content of Final Formulation (wt%)** | | | | |
|---|---|---|---|---|---|
| | **0.6** | **0.8** | **0.9** | **1.3** | **98.2** |
| **Dissipation Factor (%) at a Polar Comonomer (VA) Content of 0.2 wt%** | 0.264 (CS1) | 0.218 (CS3) | 0.149 (CS4) | 0.095 (CS2) | 0.0240 (IE2) |

| | | | | | |
|---|---|---|---|---|---|
| CS=comparative sample IE=inventive example | | | | | |

As shown in Table 5, at a given polar comonomer content for the overall composition (e.g., 0.2 wt%), the dissipation factor unexpectedly, and significantly, decreases as the amount of polar comonomer (e.g., VA) in the copolymer (e.g., EVA) decreases. Not to be bound by any particular theory, it is believed that the dissipation factor at a given comonomer content for the overall composition decreases as the comonomer is more uniformly distributed throughout the composition as a whole. For example, in Table 5, above, at a VA content of 0.2, the dissipation factor decreases as the amount of EVA in the final composition increases. This trend is unexpected because the total comonomer content in the composition is approximately the same, i.e., the amount of copolymer increases as the amount of comonomer in the copolymer decreases.

In order to further analyze dissipation factor trends, additional comparative samples are prepared according to the procedures set forth above and the formulations provided in Table 6, below.

**Table 6: Comparative Samples CS6-CS13**

| | **CS6** | **CS7** | **CS8** | **CS9** | **CS10** | **CS11** | **CS12** | **CS13** |
|---|---|---|---|---|---|---|---|---|
| PE1 (wt%) | 94.3 | 92.6 | 91.9 | 89.5 | 90.3 | 87.0 | 85.6 | 80.7 |
| EVA1 (wt%) | 3.9 | -- | -- | -- | 7.9 | -- | -- | -- |
| EVA3 (wt%) | -- | 5.6 | -- | -- | -- | 11.2 | -- | -- |
| EVA4 (wt%) | -- | -- | 6.3 | -- | -- | -- | 12.6 | -- |
| EVA2 (wt%) | -- | -- | -- | 8.7 | -- | -- | -- | 17.5 |
| Antioxidant (wt%) | 0.1 | 0.1 | 0.1 | 0.1 | 0.1 | 0.1 | 0.1 | 0.1 |
| Organic Peroxide (wt%) | 1.7 | 1.7 | 1.7 | 1.7 | 1.7 | 1.7 | 1.7 | 1.7 |
| | | | | | | | | |
| wt% polar comonomer in final composition | 1.6 | 1.6 | 1.6 | 1.6 | 3.2 | 3.2 | 3.2 | 3.2 |

| | | | | | | | | |
|---|---|---|---|---|---|---|---|---|
| CS= Comparative Sample IE=Inventive Example | | | | | | | | |

Tables 7 and 8, below, include the dissipation factor data for CS6-CS13.

**Table 7: Dissipation Factor (120°C/23±2 kV/mm) (%) for CS7-CS10 and RES**

| | **Copolymer (EVA) Content of Final Formulation (wt%)** | | | | |
|---|---|---|---|---|---|
| | **3.9** | **5.6** | **6.3** | **8.7** | **98.2** |
| **Dissipation Factor at a Polar Comonomer (VA) Content of 1.6 wt%** | 0.529 (CS6) | 0.263 (CS7) | 0.155 (CS8) | 0.123 (CS9) | 0.118 (IE5) |

**Table 8: Dissipation Factor (120°C/23±2 kV/mm) (%) for CS6-CS13 and IE1-IE2 and IE6 and RE2-RE5 and RE7**

| Stress (kV/mm) | 23±2 |
|---|---|
| | |
| **IE1** | 0.018 |
| **IE2** | 0.024 |
| **RE3** | 0.023 |
| **RE4** | 0.035 |
| **RE5** | 0.118 |
| **IE6** | 0.026 |
| **RE7** | 0.043 |
| **CS6** | 0.529 |
| **CS7** | 0.263 |
| **CS8** | 0.155 |
| **CS9** | 0.123 |
| **CS10** | 0.491 |
| **CS11** | 0.301 |
| **CS12** | 0.307 |
| **CS13** | 0.146 |

| | |
|---|---|
| CS=comparative sample IE=inventive example RE=reference example | |

As confirmed in Tables 7 and 8, at a consistent polar comonomer content, the dissipation factor unexpectedly, and significantly, decreases as the amount of ethylene-based copolymer comprising units derived from ethylene and from 0.1 wt%, based on the total weight of the copolymer, of units derived from at least one polar comonomer increases, i.e., when the composition contains an ethylene-based copolymer comprising units derived from ethylene and from 0.1 wt%, based on the total weight of the copolymer, of units derived from at least one polar comonomer as the only polyolefin in the composition. In other words, each of CS6-CS13 utilize a blend of LDPE and the ethylene-based copolymer in order to achieve the final comonomer content of the final composition. Each of CS6-CS13 has a dissipation factor of greater that of each of the Inventive Examples in which the ethylene-based copolymer is the sole polyolefin.

The results reflected in the above tables is unexpected because it is expected that the dissipation factor of a composition at a given comonomer content would be the same, regardless of whether the total comonomer content is achieved by diluting a higher-comonomer content ethylene-based copolymer with another polyolefin (e.g., LDPE) or a single low-comonomer content ethylene-based copolymer is use. However, contrary to expectations, the dissipation factor decreases when a blend is not used, i.e., when the only polyolefin in the composition is the ethylene-based copolymer comprising units derived from ethylene and from 0.1 wt%, based on the total weight of the copolymer, of units derived from at least one polar comonomer.

## Claims

1. A composition comprising:
a) from 97.5 wt%, based on the total weight of the composition, of at least one ethylene-based copolymer comprising units derived from ethylene and from 0.1 wt%, based on the total weight of the ethylene-based copolymer, of units derived from one polar comonomer,
b) from 0.050 wt% to 0.150 wt%, based on the total weight of the composition, of at least one antioxidant;
c) from 0.5 wt% to 1.75 wt%, based on the total weight of the composition, of an organic peroxide,
d) optionally, at least one co-agent; and
e) optionally, at least one tree retardant,
wherein the composition comprises from 0 wt% to less than 1 wt%, based on the total weight of the composition, of olefin-based polymers other than the ethylene-based copolymer;
wherein the one polar comonomer consists of vinyl acetate;
wherein the total comonomer content of the composition is from 0.1 wt% to 0.2 wt%, based on the total weight of the composition;
wherein the ethylene-based copolymer is crosslinked, and
wherein the composition has a dissipation factor of from 0% to less than or equal to 0.100% at a temperature of 120°C and an electrical stress of 23 kV/mm.

2. The composition of claim 1, wherein the composition consists essentially of:
a) the ethylene-based copolymer;
b) the at least one antioxidant;
c) the organic peroxide;
d) optionally, the at least one co-agent; and
e) optionally, the at least one tree retardant.

3. The composition of claim 1 or claim 2, wherein the ethylene-based copolymer is a bipolymer of ethylene and one polar comonomer, wherein the term bipolymer refers to polymers prepared from two different types of monomers.

4. The composition of any of claims 1 to 3, wherein the at least one antioxidant is selected from the group consisting of a thioether, a thioester, DSTDP, 4,4'-thiobis(2-t-butyl-5-methylpenol), tetrakis[methylene(3,5-di-tert-butyl-4-hydroxyhydrocinnamate)]methane, and 1,3,5-Tris(4-tert-butyl-3-hydroxy-2,6-dimethylbenzyl)-1,3,5-triazine-2,4,6-trione.

5. The composition of any of claims 1 to 4, wherein the composition comprises from 97.5 wt% to 98.5 wt%, based on the total weight of the composition, of the at least one ethylene-based copolymer.

6. The composition of any of claims 1 to 5, wherein the composition comprises from 0.050 wt% to 0.100 wt%, based on the total weight of the composition, of the at least one antioxidant.

7. The composition of any of claims 1 to 6, wherein the ethylene-based copolymer is made in an autoclave reactor.

8. The composition of any of claims 1 to 7, wherein the at least one ethylene-based copolymer comprises units derived from ethylene and from 0.1 wt% to 0.2 wt%, based on the total weight of the ethylene-based copolymer, of units derived from the one polar comonomer.

9. The composition of any of claims 1 to 8, wherein the composition comprises at least one co-agent.

10. The composition of any of claims 1 to 9, wherein the co-agent is selected from the group consisting of triallyl cyanurate (TAC); triallyl-1,3,5-triazine-2,4,6(1H,3H,5H)-trione (TAIC); hexaallyl melamine; trallyl phosphate; triallyl ortho formate; tetra-allyloxy-ethane; triallyl benzene-1,3,5-tricarboxylate; diallyl phthalate; zinc dimethacrylate; ethoxylated bisphenol A dimethacrylate; methacrylate terminated monomer with average chain length of C14 or C15; pentaerythritol tetraacrylate; depentaerythritol pentaacrylate; pentaerythritol triacrylate; dimethylolpropane tetraacrylate; ethoxylated trimethylolpropane triacrylate; trimethylolpropane triacrylate; 2,4,6-triallyl-1,3,5-trione; 2,4-diphentyl-4-methyl-1-pentene; triallyl trimellitate (TATM); 3,9-divinyl-2,4,8,10-tetra-oxaspiro[5.5]undecane (DVS); and alpha-methyl styrene dimer (AMSD).

11. A cable comprising an insulation layer comprising the composition of any of claims 1 to 10.

12. The cable of claim 11, further comprising a conductor;
wherein the insulation layer covers at least a portion of the conductor.

13. A method of conducting electricity, the method comprising applying voltage of from 2 kV to greater than 220 kV across the cable of claim 11 or claim 12.

## Patentansprüche

1. Zusammensetzung, umfassend:
a) zu 97,5 Gew.-%, bezogen auf das Gesamtgewicht der Zusammensetzung, mindestens ein Copolymer auf Ethylenbasis, das Einheiten umfasst, die von Ethylen abgeleitet sind, und zu 0,1 Gew.-%, bezogen auf das Gesamtgewicht des Copolymers auf Ethylenbasis, Einheiten, die von einem polaren Comonomer abgeleitet sind,
b) zu 0,050 Gew.-% bis 0,150 Gew.-%, bezogen auf das Gesamtgewicht der Zusammensetzung, mindestens ein Antioxidans;
c) zu 0,5 Gew.-% bis 1,75 Gew.-%, bezogen auf das Gesamtgewicht der Zusammensetzung, ein organisches Peroxid,
d) optional mindestens einen Co-Wirkstoff; und
e) optional mindestens ein Baumschutzmittel,
wobei die Zusammensetzung zu 0 Gew.-% bis weniger als 1 Gew.-%, bezogen auf das Gesamtgewicht der Zusammensetzung, Polymere auf Olefinbasis mit Ausnahme des Copolymers auf Ethylenbasis umfasst;
wobei das eine polare Comonomer aus Vinylacetat besteht;
wobei der Gesamtcomonomergehalt der Zusammensetzung von 0,1 Gew.-% bis 0,2 Gew.-% beträgt, bezogen auf das Gesamtgewicht der Zusammensetzung;
wobei das Copolymer auf Ethylenbasis vernetzt ist, und
wobei die Zusammensetzung einen Verlustfaktor von 0 % bis kleiner oder gleich 0,100 % bei einer Temperatur von 120 °C und einer elektrischen Spannung von 23 kV/mm aufweist.

2. Zusammensetzung nach Anspruch 1, wobei die Zusammensetzung im Wesentlichen aus Folgendem besteht:
a) dem Copolymer auf Ethylenbasis;
b) dem mindestens einen Antioxidans;
c) dem organischen Peroxid;
d) optional dem mindestens einen Co-Wirkstoff; und
e) optional, dem mindestens einen Baumschutzmittel.

3. Zusammensetzung nach Anspruch 1 oder Anspruch 2, wobei das Copolymer auf Ethylenbasis ein Bipolymer aus Ethylen und einem polaren Comonomer ist, wobei sich der Begriff Bipolymer auf Polymere bezieht, die aus zwei verschiedenen Arten von Monomeren hergestellt sind.

4. Zusammensetzung nach einem der Ansprüche 1 bis 3, wobei das mindestens eine Antioxidans aus der Gruppe ausgewählt ist, die aus einem Thioether, einem Thioester, DSTDP, 4,4'-Thiobis(2-t-butyl-5-methylphenol), Tetrakis(methylen(3,5-di-tert-butyl-4-hydroxyhydrocinnamat)]methan und 1,3,5-Tris(4-tert-butyl-3-hydroxy-2,6-dimethylbenzyl)-1,3,5-triazin-2,4,6-trion besteht.

5. Zusammensetzung nach einem der Ansprüche 1 bis 4, wobei die Zusammensetzung, bezogen auf das Gesamtgewicht der Zusammensetzung, zu 97,5 Gew.-% bis 98,5 Gew.-% mindestens einen Copolymer auf Ethylenbasis umfasst.

6. Zusammensetzung nach einem der Ansprüche 1 bis 5, wobei die Zusammensetzung zu 0,050 Gew.-% bis 0,100 Gew.-%, bezogen auf das Gesamtgewicht der Zusammensetzung, das mindestens eine Antioxidans umfasst.

7. Zusammensetzung nach einem der Ansprüche 1 bis 6, wobei das Copolymer auf Ethylenbasis in einem Autoklavenreaktor hergestellt wird.

8. Zusammensetzung nach einem der Ansprüche 1 bis 7, wobei das mindestens eine Copolymer auf Ethylenbasis Einheiten umfasst, die von Ethylen abgeleitet sind, und zu 0,1 Gew.-% bis 0,2 Gew.-%, bezogen auf das Gesamtgewicht des Copolymers auf Ethylenbasis, Einheiten, die von dem einen polaren Comonomer abgeleitet sind.

9. Zusammensetzung nach einem der Ansprüche 1 bis 8, wobei die Zusammensetzung mindestens einen Co-Wirkstoff umfasst.

10. Zusammensetzung nach einem der Ansprüche 1 bis 9, wobei der Co-Wirkstoff aus der Gruppe ausgewählt ist, bestehend aus Folgendem:
Triallylcyanurat (TAC); Triallyl-1,3,5-triazin-2,4,6(1H,3H,5H)-trion (TAIC); Hexaallylmelamin; Trallylphosphat; Triallylorthoformiat; Tetraallyloxyethan; Triallylbenzol-1,3,5-tricarboxylat; Diallylphthalat; Zinkdimethacrylat; ethoxyliertes Bisphenol-A-Dimethacrylat; Methacrylat-terminiertes Monomer mit einer durchschnittlichen Kettenlänge von C14 oder C15; Pentaerythrittetraacrylat; Depentaerythritpentaacrylat; Pentaerythrittriacrylat; Dimethylolpropantetraacrylat; ethoxyliertes Trimethylolpropantriacrylat; Trimethylolpropantriacrylat; 2,4,6-Triallyl-1,3,5-trion; 2,4-Diphentyl-4-methyl-1-penten; Triallyltrimellitat (TATM); 3,9-Divinyl-2,4,8,10-tetra-oxaspiro[5.5]undecan (DVS); und Alpha-Methylstyrol-Dimer (AMSD).

11. Kabel, umfassend eine Isolierschicht, umfassend die Zusammensetzung nach einem der Ansprüche 1 bis 10.

12. Kabel nach Anspruch 11, ferner umfassend einen Leiter;
wobei die Isolierschicht mindestens einen Teil des Leiters bedeckt.

13. Verfahren zum Leiten von Elektrizität, wobei das Verfahren das Anlegen einer Spannung von 2 kV bis über 220 kV über das Kabel nach Anspruch 11 oder 12 umfasst.

## Revendications

1. Composition comprenant :
a) de 97,5 % en poids, sur la base du poids total de la composition, d'au moins un copolymère à base d'éthylène comprenant des motifs dérivés de l'éthylène et de 0,1 % en poids, sur la base du poids total du copolymère à base d'éthylène, de motifs dérivés d'un comonomère polaire,
b) de 0,050 % en poids à 0,150 % en poids, sur la base du poids total de la composition, d'au moins un antioxydant ;
c) de 0,5 % en poids à 1,75 % en poids, sur la base du poids total de la composition, d'un peroxyde organique,
d) facultativement, au moins un co-agent ; et
e) facultativement, au moins un retardateur d'arborescence ,
dans laquelle la composition comprend de 0 % en poids à moins de 1 % en poids, sur la base du poids total de la composition, de polymères à base d'oléfine autres que le copolymère à base d'éthylène ;
dans laquelle ledit comonomère polaire est l'acétate de vinyle ;
dans laquelle la teneur totale en comonomère de la composition est comprise entre 0,1 % en poids et 0,2 % en poids, sur la base du poids total de la composition ;
dans laquelle le copolymère à base d'éthylène est réticulé, et
dans laquelle la composition a un facteur de dissipation de 0 % à inférieur ou égal à 0,100 % à une température de 120 °C et une contrainte électrique de 23 kV/mm.

2. Composition selon la revendication 1, dans laquelle la composition est sensiblement constituée de :
a) le polymère à base d'éthylène ;
b) l'au moins un antioxydant ;
c) le peroxyde organique ;
d) facultativement, l'au moins un co-agent ; et
e) facultativement, l'au moins un retardateur d'arborescence.

3. Composition selon la revendication 1 ou la revendication 2, dans laquelle le copolymère à base d'éthylène est un bipolymère d'éthylène et d'un comonomère polaire, dans laquelle le terme bipolymère fait référence à des polymères préparés à partir de deux types de monomères différents.

4. Composition selon l'une quelconque des revendications 1 à 3, dans laquelle l'au moins un antioxydant est choisi dans le groupe constitué d'un thioéther, d'un thioester, de DSTDP, de 4,4'-thiobis(2-t-butyl-5-méthylpénol), de tétrakis[méthylène(3,5-di-tert-butyl-4-hydroxyhydrocinnamate)]méthane, et de 1,3,5-tris(4-tert-butyl-3-hydroxy-2,6-diméthylbenzyl)-1,3,5-triazine-2,4,6-trione.

5. Composition selon l'une quelconque des revendications 1 à 4, dans laquelle la composition comprend de 97,5 % en poids à 98,5 % en poids, sur la base du poids total de la composition, de l'au moins un copolymère à base d'éthylène.

6. Composition selon l'une quelconque des revendications 1 à 5, dans laquelle la composition comprend de 0,050 % en poids à 0,100 % en poids, sur la base du poids total de la composition, de l'au moins un antioxydant.

7. Composition selon l'une quelconque des revendications 1 à 6, dans laquelle le copolymère à base d'éthylène est fabriqué dans un réacteur autoclave.

8. Composition selon l'une quelconque des revendications 1 à 7, dans laquelle l'au moins un copolymère à base d'éthylène comprend des motifs dérivés de l'éthylène et de 0,1% en poids à 0,2 % en poids, sur la base du poids total du copolymère à base d'éthylène, de motifs dérivés dudit comonomère polaire.

9. Composition selon l'une quelconque des revendications 1 à 8, dans laquelle la composition comprend au moins un co-agent.

10. Composition selon l'une quelconque des revendications 1 à 9, dans laquelle le co-agent est choisi dans le groupe constitué de cyanurate de triallyle (TAC) ; triallyl-1,3,5-triazine-2,4,6(1H,3H,5H)-trione (TAIC) ; hexa-allylmélamine ; phosphate de trallyle ; orthoformiate de triallyle ; tétra-allyloxy-éthane ; benzène-1,3,5-tricarboxylate de triallyle ; phtalate de diallyle ; diméthacrylate de zinc ; diméthacrylate de bisphénol A éthoxylé ; monomère à terminaison méthacrylate avec une longueur de chaîne moyenne de C14 ou C15 ; tétra-acrylate de pentaérythritol ; penta-acrylate de depentaérythritol ; triacrylate de pentaérythritol ; tétra-acrylate de diméthylolpropane ; triacrylate de triméthylolpropane éthoxylé ; triacrylate de triméthylolpropane ; 2,4,6-triallyl-1,3,5-trione ; 2,4-diphentyl-4-méthyl-1-pentène ; trimellitate de triallyle (TATM) ; 3,9-divinyl-2,4,8,10-tétra-oxaspiro[5.5]undécane (DVS) ; et dimère d'alpha-méthylstyrène (AMSD).

11. Câble comprenant une couche isolante comprenant la composition selon l'une quelconque des revendications 1 à 10.

12. Câble selon la revendication 11, comprenant en outre un conducteur ;
dans lequel la couche isolante recouvre au moins une partie du conducteur.

13. Procédé de conduction d'électricité, le procédé comprenant l'application d'une tension de 2 kV à plus de 220 kV à travers le câble selon la revendication 11 ou la revendication 12.
